# EUROPÄISCHE PATENTSCHRIFT

(11) **EP 2 256 001 B1**
(45) Veröffentlichungstag und Bekanntmachung des Hinweises auf die Patenterteilung: **27.06.2012**
(21) Anmeldenummer: 10005335.4
(22) Anmeldetag: 21.05.2010
(51) Int. Cl.: B60R 9/10

(54) **Lastenträger mit einem Schlitten und Distanzkörpern**
Load carrier with a slider and separators
Support de charges doté d'un tiroir et de corps d'espacement

(30) Priorität: 27.05.2009 DE 102009022622; 24.12.2009 DE 102009060387
(43) Veröffentlichungstag der Anmeldung: 01.12.2010
(60) Teilanmeldung: 12003435.0
(73) Patentinhaber: WESTFALIA - Automotive GmbH, 33378 Rheda-Wiedenbrück (DE)
(72) Erfinder: Aufderheide, Reinhold, 33397 Rietberg (DE); Hermbusch, Gerhard, 33449 Langenberg (DE); Lueders, Marcem, 33442 Herzebrock (DE); Peitz, Jürgen, 33378 Rheda-Wiedenbrück (DE)
(74) Vertreter: Bregenzer, Michael

(56) Entgegenhaltungen:
- EP-A1- 1 876 061
- EP-A2- 1 323 372
- DE-A1-102004 021 709
- DE-A1-102005 036 025
- GB-A- 663 939
- US-A1- 2006 038 422
- US-A1- 2008 061 543

## Beschreibung

Die Erfindung betrifft einen Lastenträger für ein Fahrzeug, insbesondere einen Personenkraftwagen, mit einer Schlitten-Führungsbasis, insbesondere zur Montage an einer Lastenträgeraufnahme des Fahrzeugs, und mit einem an der Schlitten-Führungsbasis geführten, zwischen einer Ruhestellung und einer Gebrauchsstellung entlang einer Längsachse verstellbaren Schlitten gemäß dem Oberbegriff des Anspruchs 1.

Ein solcher Lastenträger ist z.B. aus DE 10 2004 021 709 A1 bekannt.

Lastenträger, die in der Art einer Schublade aus dem Heck eines Kraftfahrzeuges ausfahrbar sind, sind bekannt. Beispielsweise hat die Schlitten-Führungsbasis Führungsschienen, an denen Läuferschienen schiebebeweglich, d.h. längsbeweglich, gelagert sind. Die Schlitten-Führungsbasis umfasst z.B. Führungsschienen, an denen Läuferschienen des Schlittens geführt sind.

Die Läuferschienen und auch die Führungsschienen müssen beim Fahrbetrieb des Fahrzeuges verhältnismäßig großen Belastungen standhalten, weshalb in der Praxis jedenfalls Schienenprofile verwendet werden, die zwei, in der Regel drei zueinander winkelige Schenkelabschnitte aufweisen. Beispielsweise kann man im Querschnitt U-förmige Schienenprofile als Läuferschiene und Führungsschiene verwenden.

Wenn der Schlitten zwischen der Ruhestellung und der Gebrauchsstellung verstellt wird, gleiten die Läuferschienen an den Führungsschienen entlang. Es ist daher ein Spiel zwischen den Schienen vorzusehen, damit der Schlitten nicht klemmt.

Davon ausgehend ist es die Aufgabe der vorliegenden Erfindung, einen Lastenträger vorzuschlagen, bei dem der Schlitten bezüglich der Schlitten-Führungsbasis zwar möglichst spielarm, aber leicht beweglich geführt ist.

Zur Lösung der Aufgabe ist ein Lastenträger gemäß der technischen Lehre des Anspruchs 1 vorgesehen.

Ein Grundgedanke der Erfindung ist es, dass die Läuferschiene und die Führungsschiene durch den Distanzkörper oder mehrere Distanzkörper auf Distanz gehalten werden. Der Distanzkörper kann beispielsweise eine vertikale Distanz oder eine horizontale Distanz zwischen der Läuferschiene und der Führungsschiene herstellen.

Der mindestens eine Distanzkörper nimmt in mindestens einer Längsposition des Schlittens, zum Beispiel der Gebrauchsstellung und/oder in der Ruhestellung, eine inaktive Stellung ein. In der inaktiven Stellung sind die einander zugewandten Schienenflächen der Führungsschiene und der Läuferschiene in direkter Umgebung des jeweiligen Distanzkörpers in unmittelbarem Kontakt zueinander. Das ist beispielsweise bei dem sogenannten Verspannen vorteilhaft.

Zwar ist die in den Ausführungsbeispielen beschriebene Ausgestaltung der Läuferschiene und der Führungsschiene vorteilhaft. Der mindestens eine Distanzkörper kann aber auch im Zusammenhang mit anderen Profilarten, z.B. Paarungen aus ineinandergreifenden U-Profilen und/oder L-Profilen, mit und ohne Verstärkungsschenkel oder Verstärkungsrippe, oder dergleichen, vorteilhaft eingesetzt werden.

Der Distanzkörper kann beispielsweise als ein Gleitkörper ausgestaltet sein. Vorzugsweise besteht der Distanzkörper aus einem gleitfähigen Kunststoffmaterial und/oder ist mit einer gleitfähigen Beschichtung versehen, z.B. Teflon. Durch den Distanzkörper ist gewährleistet, dass die Führungsschiene und die Läuferschiene zumindest partiell nicht aufeinander aufliegen, was die Gleiteigenschaften verbessert.

Dies muss selbstverständlich nicht über die gesamte Längsverschiebeentfernung, die der Schlitten bezüglich der Schlitten-Führungsbasis zurücklegen kann, der Fall sein. Es ist nämlich auch möglich, dass der Distanzkörper eine unwirksame Position einnimmt, beispielsweise zum Verspannen des Schlittens bezüglich der Führungsbasis. Dann sind die Führungsschienen und die Läuferschienen zweckmäßigerweise unmittelbar miteinander in Kontakt. Dies hat den Vorteil, dass der oder die Distanzkörper durch das Verspannen nicht beschädigt werden. Weiterhin wird eine etwaige Elastizität, die durch den Distanzkörper hervorgerufen wird und die Verspannung der Schienenpaare verschlechtern könnte, dadurch vermieden.

Aber auch das Umgekehrte kann der Fall sein, dass nämlich der Distanzkörper in einer Längsposition wirksam wird, beispielsweise in der Ruhestellung des Schlittens, um sozusagen eine Positionierhilfe oder einen Positionierkörper darzustellen. Der Distanzkörper oder die Distanzkörper stellen bei dieser Anordnung sicher, dass der Schlitten bezüglich der Schlitten-Führungsbasis eine exakte Position einnimmt. Dies ist insbesondere bei horizontal angeordneten oder horizontal wirksamen Distanzkörpern zweckmäßig. Ist jedoch der Schlitten außerhalb dieser Längsposition, beispielsweise beim Ausziehen oder Wegziehen von der Schlitten-Führungsbasis, stehen die Distanzkörper oder steht der Distanzkörper einer solchen Zugbewegung oder Verstellung nicht im Weg, sondern es ist ein größeres Spiel zwischen der jeweiligen Läuferschiene und Führungsschiene vorhanden, was die Auszugsbewegung erleichtert.

Mithin kann also ein Distanzkörper verschiedene Arten von Flächen aufweisen:
- Eine Gleitfläche zum Gleiten an der Führungsschiene oder der Läuferschiene (abhängig davon, wo der Distanzkörper vorteilhaft fest angeordnet ist).
- Eine Führungsfläche zum Führen der Läuferschiene und/oder der Führungsschiene. Beispielsweise kann eine Führungskontur an dem Distanzkörper vorgesehen sein, der mit einer Gegenkontur an der jeweiligen anderen Schiene zusammenwirkt.
- Eine Schrägfläche, an der die jeweils andere Schienenfläche oder der daran angeordnete Distanzkörper aufgleiten kann. Diese Schrägfläche ist insbesondere bei dem als Positionierhilfe dienenden Distanzkörper (wie oben beschrieben) vorteilhaft.

Der Distanzkörper ist in der inaktiven Stellung beispielsweise vor einem Längsende der jeweils anderen Schiene positioniert. Eine bevorzugte Ausführungsform sieht jedoch vor, dass für den Distanzkörper, der an der Führungsschiene oder der Läuferschiene angeordnet ist, an der jeweils anderen Schiene (Führungsschiene oder Läuferschiene) eine Aufnahme vorhanden ist, in die der Distanzkörper in der inaktiven Stellung eingreifen kann. Die Aufnahme kann beispielsweise ein Loch, eine Öffnung oder eine Vertiefung sein.

Weiterhin ist es vorteilhaft, wenn der Distanzkörper ein Rastelement darstellt. So ist beispielsweise vorgesehen, dass der Distanzkörper zum Verrasten in eine Rastaufnahme eingreift, wenn der Schlitten eine vorbestimmte Längsposition einnimmt. Die Rastaufnahme ist beispielsweise in der Läuferschiene angeordnet, während der Distanzkörper an der Führungsschiene angeordnet ist, oder umgekehrt. Es versteht sich, dass auch mehrere Rastaufnahmen und als Rastglieder dienende Distanzkörper vorgesehen sein können.

Die inaktive Stellung nimmt der mindestens eine Distanzkörper zweckmäßigerweise dann ein, wenn eine Spanneinrichtung die Läuferschiene mit der Führungsschiene verspannt. Die Spanneinrichtung ist vorteilhaft dazu vorgesehen, die einander zugewandten Schienenflächen des Schienenpaares aus Führungsschiene und Läuferschiene unmittelbar miteinander zu verspannen. Der Distanzkörper ist dabei nicht im Weg, das heißt, er ist nicht zwischen den gegeneinander verspannten Schienenflächen angeordnet, sondern beispielsweise in der vorgenannten Vertiefung positioniert.

Bevorzugt ist eine Halteeinrichtung vorgesehen, die in einer Haltestellung den Schlitten in mindestens einer Stellung bezüglich der Schlitten-Führungsbasis hält und in einer Freigabestellung den Schlitten zu einer Verstellung bezüglich der Schlitten-Führungsbasis freigibt.

Nun ist es möglich, dass das Halteglied beispielsweise formschlüssig in die Führungsschiene oder die Läuferschiene eingreift, um den Schlitten ortsfest bezüglich der Führungsbasis zu halten. Bevorzugt wirkt jedoch der Distanzkörper mit dem Halteglied zusammen. Beispielsweise bildet er ein Widerlager für das mindestens eine Halteglied in der Haltestellung oder hat eine Halteaufnahme, in die das Halteglied in der Haltestellung eingreifen kann. Somit muss man beispielsweise die jeweilige Schiene nicht schwächen, um eine Halteaufnahme oder ein Widerlager für das Halteglied bereitzustellen. Vielmehr wird diese Funktion vom Distanzkörper realisiert. Weiterhin kann der Distanzkörper, der zweckmäßigerweise aus Kunststoff, Messing, Bronze, Aluminium oder einem sonstigen Material besteht, verhältnismäßig einfach geformt werden, z.B. durch Spritzgießen oder Strangpressen, um die Halteaufnahme bereitzustellen. Bei dem üblicherweise als Profilstrang ausgestalteten Schienenprofil hingegen ist eine kompliziert geformte Halteaufnahme kaum möglich. Vielmehr wird man hier lediglich eine Bohrung vorsehen, um das Halteglied aufnehmen zu können.

Das Halteglied kann zweckmäßigerweise in der Haltestellung zu einem Verspannen des Schlittens bezüglich der Schlitten-Führungsbasis beitragen: Das mindestens eine Halteglied übt zweckmäßigerweise in der Haltestellung eine Spannkraft auf den Schlitten quer zu der Längsachse, beispielsweise horizontal, aus. Damit wird der Schlitten quasi gegen die Führungsbasis gedrückt oder gezogen, mithin also verspannt.

Nun kann eine Ausführungsform vorsehen, dass die Spannkraft des Halteglieds etwa in einer Längsmitte oder Quermitte auf den Schlitten wirkt, mithin also symmetrisch oder im Wesentlichen symmetrisch. Eine bevorzugte Ausführungsform sieht jedoch vor, dass das mindestens eine Halteglied in der Haltestellung die Spannkraft auf einen bezüglich der Längsachse außermittigen Bereich, zum Beispiel einen Eckbereich oder einen Längsendbereich, des Schlittens ausübt, derart, dass die Läuferschienen mit einem Drehmoment quer zu der Längsachse gegen die Führungsschienen gespannt werden. Beim Fahrbetrieb des Fahrzeuges hat diese spielfreie Verspannung den Vorteil, dass der Schlitten bezüglich der Schlitten-Führungsbasis spielfrei und somit auch geräuscharm oder klapperfrei gehalten wird.

Bevorzugt sind mindestens zwei Distanzkörper vorgesehen, von denen einer am Schlitten und einer an der Schlitten-Führungsbasis an einander entgegengesetzten Längsseiten des Lastenträgers angeordnet sind. Die beiden Distanzkörper sind bezüglich der Längsachse in einer der Längsposition des Schlittens, zum Beispiel der Gebrauchsstellung oder der Ruhestellung, etwa in derselben Höhe angeordnet. Dann nehmen sie eine Positionierposition ein, in der die Distanzkörper in Kontakt mit ihren benachbarten, einander zugewandten Schienenflächen der Läuferschiene oder der Führungsschiene sind und somit den Schlitten bezüglich der Schlitten-Führungsbasis positionieren. Diese Positionierung erfolgt also quer zur Längsachse, beispielsweise horizontal, wobei auch eine vertikale Positionierung auf diesem Wege ohne weiteres möglich ist. Außerhalb der vorgenannten Längsposition sind jedoch die Distanzkörper nicht in Kontakt mit der benachbarten Schienenfläche der anderen Schiene, so dass ein verhältnismäßig großes Spiel zwischen einerseits dem Schlitten und andererseits der Führungsbasis vorhanden ist. Der Schlitten kann also bequem betätigt werden, was insbesondere bei einer manuellen Betätigung des Schlittens beziehungsweise einem manuellen Verfahren desselben vorteilhaft ist.

Im Weiteren ist es vorteilhaft, wenn der Schlitten mindestens einen Distanzkörper aufweist, der beim Entfernen des Schlittens von der Schlitten-Führungsbasis, das heißt beim Ausziehen in Richtung der Gebrauchsstellung, außer Kontakt mit der ihm zugeordneten benachbarten Führungsschiene gelangt, so dass er ein weiteres Ausziehen des Schlittens nicht verhindert. In der umgekehrten Richtung, das heißt beim Einfahren des Schlittens in Richtung der Schlitten-Führungsbasis, hingegen ist der Distanzkörper wirksam, das heißt, er gelangt in Kontakt mit der zugeordneten Führungsschiene und trägt zur Führung des Schlittens bezüglich der Führungsbasis bei.

Im Sinne einer symmetrischen Führung ist es bei der vorgenannten Anordnung zweckmäßig, wenn am Schlitten an zwei einander entgegengesetzten Längsseiten des Schlittens angeordnete Distanzkörper vorgesehen sind, die in der von der Führungsbasis entfernteren Längsposition des Schlittens außer Kontakt, in einer näher zur Schlitten-Führungsbasis hin verstellten Längsposition des Schlittens hingegen, zum Beispiel in der Ruhestellung oder der Nähe der Ruhestellung, in Kontakt mit der zugeordneten, benachbarten Führungsschiene sind.

Die nachfolgende Anordnung greift die Vorteile der beiden vorstehenden vorteilhaften Ausgestaltungen auf:

Bevorzugt sind zwei bezüglich der Längsachse beabstandete Distanzkörper mit jeweils paarweise an einander entgegengesetzten Längsseiten des Lastenträgers angeordneten Distanzkörpern vorgesehen. Die Distanzkörper des einen Distanzkörper-Paars sind am Schlitten angeordnet und in einer Längsposition des Schlittens, in der dieser zur Schlitten-Führungsbasis hin verstellt ist, in Kontakt mit der benachbarten Führungsschiene. Davon entfernt, das heißt in einer ausgezogenen Position des Schlittens, sind die Distanzkörper jedoch außer Kontakt mit den zugeordneten Führungsschienen und behindern ein weiteres Verstellen des Schlittens bezüglich der Führungsbasis nicht. Das andere Distanzkörper-Paar sieht vor, dass ein Distanzkörper am Schlitten, der andere Distanzkörper an der Führungsbasis angeordnet ist. In einer zur Schlitten-Führungsbasis hin verstellten Längsposition des Schlittens nehmen diese beiden Distanzkörper eine Positionierposition ein, in der die Distanzkörper in Kontakt mit ihren benachbarten, einander zugewandten Schienenflächen der Läuferschiene und der Führungsschiene sind und somit den Schlitten bezüglich der Schlitten-Führungsbasis positionieren.

Eine Ausführungsform dieser Anordnung kann vorsehen, dass bei einer Schlitten-Führungsbasis und einem Schlitten, die beide eine Rechteckkontur aufweisen, und im Wesentlichen in Überdeckung miteinander sind, wenn der Schlitten in der Ruhestellung ist, drei der Distanzkörper an drei voneinander verschiedenen Eckbereichen der Rechteckkontur am Schlitten angeordnet sind, während am dritten Eckbereich der Distanzkörper nicht am Schlitten, sondern an der Schlitten-Führungsbasis, das heißt der Führungsschiene, angeordnet ist. Somit sind also an vier zueinander beabstandeten Eckbereich des Rechtecks jeweils Distanzkörper vorgesehen, von denen drei am Schlitten, einer jedoch an der Schlitten-Führungsbasis angeordnet sind.

Mindestens eine der Führungsschienen weist vorteilhaft einen Auflagerschenkel zum Lagern der zugeordneten Läuferschiene auf, der von einem zum Abstützen des Auflagerschenkels vorgesehenen Stützschenkel der Führungsschiene winkelig absteht. Insbesondere für leichte, belastbare Führungsschienen ist es vorteilhaft, wenn an einer zu dem Stützschenkel entgegengesetzten, in Richtung der Längsachse verlaufenden Längsseite des Auflagerschenkels ein Verstärkungsschenkel angeordnet ist, der von dem Auflagerschenkel in Richtung zu dem Stützschenkel hin winkelig absteht, wobei der Verstärkungsschenkel quer zu der Längsachse kürzer als der Stützschenkel ist, so dass unterhalb des Verstärkungsschenkels, neben dem Stützschenkel ein Freiraum vorhanden ist.

Ein Grundgedanke ist es dabei, dass der Verstärkungsschenkel verhältnismäßig kurz baut, so dass unterhalb desselben ein Freiraum vorhanden ist, der für verschiedene Zwecke nutzbar ist. Zudem ist die Führungsschiene kompakt, jedenfalls in ihrem oberen, den Auflagerschenkel aufweitenden Bereich. Weiterhin erhöht der verhältnismäßig kurze Verstärkungsschenkel das Gewicht der Führungsschiene weniger als ein längerer Schenkel. Auf der anderen Seite hat sich in der Praxis herausgestellt, dass auch ein kurzer, den Auflagerschenkel verstärkender Verstärkungsschenkel ausreicht, um die Last des Schlittens zu tragen.

Vorteilhaft hat der Lastenträger nicht nur eine, sondern zwei erfindungsgemäß ausgestaltete Führungsschienen.

Der Verstärkungsschenkel erstreckt sich zweckmäßigerweise über mindestens eine Längslänge, in der die Führungsschiene von der zugeordneten Läuferschiene des Schlittens in der Gebrauchsstellung und/oder der Ruhestellung überdeckt wird. Vorteilhaft ist der Verstärkungsschenkel über die gesamte Längslänge der Führungsschiene vorgesehen, so dass diese insgesamt eine stabile, belastbare Konstruktion darstellt. Außerdem wird dadurch die Fertigung erleichtert. Es genügt allerdings, den Verstärkungsschenkel insbesondere in demjenigen Bereich vorzusehen, wo die Führungsschiene besonders belastet wird, beispielsweise im Wesentlichen im Bereich der Überdeckung durch die Läuferschiene in der Gebrauchsstellung.

Der Stützschenkel, der Auflagerschenkel und der Verstärkungsschenkel bilden vorteilhaft eine U-förmige Aufnahme. Die einander zugewandten Flächen des Verstärkungsschenkels und des Stützschenkels können dabei eine schrägwinklig offene Aufnahme definieren oder auch in einer bevorzugten Ausgestaltung der Erfindung zueinander parallel sein.

Wie nachfolgend noch erläutert wird, eignet sich die U-Aufnahme für verschiedenerlei Zwecke, unter anderem zur Verspannung der Läuferschiene mit der Führungsschiene und/oder für Führungsaufgaben, bei denen die Aufnahme eine Führungsnut darstellt.

Von dem Stützschenkel der Führungsschiene steht zweckmäßigerweise ein Befestigungsschenkel winkelig, beispielsweise rechtwinkelig, zur Befestigung der Führungsschiene auf einem Untergrund ab. Der Befestigungsschenkel und der Stützschenkel bilden zweckmäßigerweise eine L-förmige Anordnung. Es versteht sich, dass auch eine T-förmige Anordnung möglich ist, bei der der Befestigungsschenkel sozusagen die Befestigungsbasis bildet, von der insbesondere längsmittig nach oben der Stützschenkel absteht.

Querbreiten des Befestigungsschenkels und eines Innenraums der zugeordneten Läuferschiene, in den die Führungsschiene eingreift, entsprechen zweckmäßigerweise einander. Somit ist der Befestigungsschenkel der Führungsschiene zwar verhältnismäßig breit, passt aber in den Innenraum der Läuferschiene. Eine weitere vorteilhafte Maßnahme sieht vor, dass eine Querbreite des Auflagerschenkels kleiner ist als eine Querbreite des Befestigungsschenkels. Dadurch kommt zum Ausdruck, dass der Auflagerschenkel verhältnismäßig schmal baut, während der Befestigungsschenkel breit ist und somit eine gute Basis zur Befestigung auf einem Untergrund, beispielsweise einer Montageplatte der Karosserie des Fahrzeuges oder dergleichen, darstellt.

Bevorzugt ist eine Spanneinrichtung vorgesehen, wobei ein Spannbacken eines Spannkörpers in einer Spannstellung der Verspanneinrichtung in eine U-förmige Aufnahme eingreift, die der Auflagerschenkel, der Verstärkungsschenkel und der Stützschenkel der Führungsschiene begrenzen. Ein Zuganker der Verspanneinrichtung wirkt mittels eines Widerlagerkörpers auf die Läuferschiene, die der Führungsschiene zugeordnet ist. Wird also der Zuganker angezogen, drückt sein Widerlagerkörper auf die Läuferschiene, während er mit dem Spannkörper zugfest verbunden ist, so dass die Läuferschiene mit der Führungsschiene verspannbar ist.

Der Zuganker der Spanneinrichtung durchdringt zweckmäßigerweise die der Führungsschiene zugeordnete Läuferschiene. Dabei ist es vorteilhaft, wenn er beispielsweise einen Lagerschenkel der Läuferschiene, der auf dem Auflagerschenkel der Führungsschiene aufliegt, durchdringt, vorzugsweise etwa in der Mitte seiner Querbreite.

Der Spannkörper ist beispielsweise in der Art einer Spannpratze ausgestaltet, die die Führungsschiene untergreift und somit in die U-förmige Aufnahme eingreift. Der Spannbacken oder Nutvorsprung des Spannkörpers hat zweckmäßigerweise eine Längsgestalt und erstreckt sich beidseits des Zugankers, so dass eine gleichmäßige Verspannung und ein großflächiger Lasteintrag auf die Führungsschiene möglich ist.

Zwischen dem Widerlagerkörper und der Läuferschiene ist ein zweckmäßigerweise Verstärkungskörper angeordnet. Der Verstärkungskörper hat beispielsweise eine U-förmige oder L-förmige Gestalt. Der Verstärkungskörper umfasst beispielsweise eine Platte oder ist plattenartig. Eine bevorzugte Maßnahme sieht vor, dass der Verstärkungskörper mit der Läuferschiene verklebt ist.

Es versteht sich, dass auch die Führungsschiene insbesondere im Wirkbereich der Spanneinrichtung insbesondere angeklebte Verstärkungen aufweisen kann, beispielsweise eine Verstärkungsplatte oder einen Verstärkungsabschnitt, der in der U-förmigen Aufnahme unterhalb des Auflagerschenkels vorgesehen ist.

Der Spannkörper kann beispielsweise ein Führungselement bilden. Die Führung kann beispielsweise dadurch erfolgen, dass der Spannkörper in die U-förmige Nut eingreift, zum Beispiel mit seinem Spannbacken, und diese somit eine Führungsnut zur Führung des als Nutkörper ausgestalteten Spannbackens bildet. Weiterhin ist es möglich, dass der Spannkörper sich beispielsweise an dem Verstärkungsschenkel abstützt und so eine Führung realisiert. Weiterhin ist es möglich, dass der Spannkörper eine Führungsnut aufweist, in die der Verstärkungsschenkel eingreift. Somit kann also die Funktion des Spannens und des Führens durch ein und dieselbe Konstruktion realisiert werden.

An dieser Stelle sei allerdings erwähnt, dass die Kombination "Spannen" und "Führen" nicht durch die selben Komponenten realisiert sein muss, das heißt, dass beispielsweise ein von der Spanneinrichtung separater Führungskörper an der Läuferschiene angeordnet sein kann, die beispielsweise in die U-förmige Nut unterhalb des Auflagerschenkels eingreift, um eine Führung der Läuferschiene an der Führungsschiene herzustellen.

Mindestens eine der Läuferschienen und/oder mindestens eine der Führungsschienen weist vorteilhaft einen Grundschenkel und einen zu dem Grundschenkel winkeligen Seitenschenkel auf. Zweckmäßigerweise ist vorgesehen, dass an dem Grundschenkel und/oder dem Seitenschenkel mindestens eine sich in Richtung der Längsachse erstreckende Verstärkungsrippe angeordnet ist.

Ein Grundgedanke ist es dabei, durch eine Verstärkungsrippe eine zumindest partielle Verstärkung der jeweiligen Schiene (Läuferschiene oder Führungsschiene) zu erreichen. Die Verstärkungsrippe erstreckt sich zweckmäßigerweise über die gesamte Längserstreckungsrichtung der Läuferschiene oder der Führungsschiene, insbesondere dort, wo sich die Läuferschiene und die Führungsschiene überdecken, insbesondere miteinander verspannt werden. Aber auch an einem freien Ende einer jeweiligen Läuferschiene, das heißt dort, wo der Schlitten relativ weit vor das Heck des Fahrzeuges vorsteht, können große Belastungen auftreten, wobei sich die Verstärkungsrippe oder eine Verstärkungsrippenstruktur als vorteilhaft erweist.

Nun ist es denkbar, die Verstärkungsrippe verhältnismäßig schmal auszugestalten, das heißt als eine Art Rippenausprägung oder dergleichen. Bevorzugt hat die Verstärkungsrippe jedoch eine verhältnismäßig große Innenbreite oder Innentiefe. Die mindestens eine Verstärkungsrippe umfasst zweckmäßigerweise einen Aufnahmekanal zur Aufnahme mindestens einer Komponente, zum Beispiel eines Kabels, eines Führungskörpers, einer Antriebskomponente oder auch einer Verriegelungskomponente. So können die Funktionen "Verstärken der Schiene" und "Unterbringen weiterer Komponenten" durch die Verstärkungsrippe in Einklang gebracht werden. Der von der Verstärkungsrippe benötigte Platz wird also optimal genutzt. Der Aufnahmekanal ist beispielsweise U-förmig. In dem Aufnahmekanal ist die Komponente, beispielsweise ein dort angeordnetes Kabel, geschützt untergebracht, was beim Fahrbetrieb des Fahrzeuges vorteilhaft ist. Auch beim Ausziehen oder Einfahren des Schlittens bezüglich der Schlitten-Führungsbasis sind Beschädigungen der Komponente nicht zu befürchten.

Weiterhin ist es zweckmäßig, wenn der Aufnahmekanal zur benachbarten Führungsschiene oder Läuferschiene hin offen ist. Dies bedeutet im Umkehrschluss, dass die Führungsschiene oder die Läuferschiene den Aufnahmekanal sozusagen "verschließen", jedenfalls insoweit überdecken, dass die dort angeordnete Komponente geschützt ist.

Es versteht sich, dass die Verstärkungsrippe nicht nur einen U-förmigen Querschnitt aufweisen kann, sondern beispielsweise auch einen V-förmigen oder W-förmigen.

Die mindestens eine Verstärkungsrippe ist zweckmäßigerweise an einem freien Quer-Endbereich der Läuferschiene oder der Führungsschiene angeordnet oder bildet denselben. So ist sozusagen eine Verstärkungsrippenkontur am freien Querende, das heißt also nicht am Längsende, der Führungsschiene oder Läuferschiene angeordnet. Bei der Läuferschiene, die in der Regel die Führungsschiene überdeckt, ist diese Anordnung besonders vorteilhaft, da der Bauraum oberhalb der Verstärkungsrippe für andere Zwecke, beispielsweise zur Aufnahme von Halterungen des Lastenträgers oder dergleichen, frei zur Verfügung steht.

Die Verstärkungsrippe weist zweckmäßigerweise zwei einander gegenüberliegende Vorsprungschenkel auf, die vor den Seitenschenkel vorstehen, wobei die Vorsprungschenkel parallel zum Grundschenkel der jeweiligen Schiene verlaufen. Auch die umgekehrte Konfiguration ist möglich, dass nämlich die Vorsprungschenkel am Grundschenkel angeordnet sind und parallel zum Seitenschenkel verlaufen.

In diesem Zusammenhang sei erwähnt, dass der Seitenschenkel und der Grundschenkel zweckmäßigerweise zueinander rechtwinkelig sind.

Einander gegenüberliegende Seitenschenkel der Führungsschiene und/oder der Läuferschiene haben zweckmäßigerweise jeweils eine Verstärkungsrippe (es könnten auch pro Seitenschenkel mehrere Verstärkungsrippen vorgesehen sein), wobei der Grundschenkel der jeweiligen Schiene zwischen den Seitenschenkeln angeordnet ist. Dadurch ergibt sich eine U-förmige Grundkonfiguration aus Grundschenkel und Seitenschenkeln, wobei an den beiden vom Grundschenkel abstehenden Seitenschenkeln jeweils eine Verstärkungsrippe oder mehrere Verstärkungsrippen angeordnet sind.

Wenn diese Verstärkungsrippen dann am Querendbereich der jeweiligen Schiene angeordnet sind, ergibt sich eine Omega-förmige oder Hut-förmige Gestalt der jeweiligen Führungs- oder Läuferschiene.

Diese Konfiguration sieht also vor, dass zwei einander gegenüberliegende Seitenschenkel und der zwischen den Seitenschenkeln angeordnete Grundschenkel einen U-förmigen Querschnitt der jeweiligen Schiene definieren und von den Seitenschenkeln eine Verstärkungsrippe in der Art einer Hutkrempe oder eines Flanschvorsprungs an einer dem Grundschenkel entgegengesetzten Seite vorsteht, das heißt, dass also die Verstärkungsrippe sozusagen den Innenraum der Schiene vergrößert beziehungsweise nach außen vor diese vorsteht.

Mindestens eine der Läuferschienen hat zweckmäßigerweise einen Lagerschenkel zum Lagern auf der zugeordneten Führungsschiene, beispielsweise einem Auflagerschenkel derselben, und mindestens einen von dem Lagerschenkel winkelig abstehenden, seitlich neben der Führungsschiene verlaufenden Seitenschenkel, der beispielsweise neben einem den Auflagerschenkel stützenden Stützschenkel verläuft. Der Lagerschenkel und der Grundschenkel sind dabei identisch, die Verstärkungsrippe verstärkt den Seitenschenkel.

Zwar wird in der Zeichnung eine mit zwei Verstärkungsrippen versehene Läuferschiene im Detail dargestellt. Es ist aber auch möglich, dass eine Führungsschiene mit mindestens einer Verstärkungsrippe versehen ist, z.B. an einem einen Auflagerschenkel tragenden Stützschenkel.

Der Schlitten und die Schlitten-Führungsbasis weisen sich in Richtung der Längsachse erstreckende Längsseiten und sich quer dazu erstreckende Vorderquerseiten und Hinterquerseiten auf, wobei die Vorderquerseiten und die Hinterquerseiten jeweils in der Ruhestellung näher beieinander angeordnet sind als in der Gebrauchsstellung, in der die Vorderquerseite des Schlittens zur Hinterquerseite der Schlitten-Führungsbasis hinbewegt ist. An dem Schlitten sind mindestens eine Elektro-Komponente und eine elektrische Elektro-Leitung zum Anschluss der Elektro-Komponente angeordnet, wobei die Elektro-Leitung einerseits an einem Schlitten-Befestigungsort ortsfest bezüglich des Schlittens und andererseits an einem Basis-Befestigungsort ortsfest bezüglich der Schlitten-Führungsbasis festgelegt ist, so dass die Elektro-Leitung von dem Schlitten bei einem Verstellen zwischen der Gebrauchsstellung und der Ruhestellung mitgenommen wird.

Bezogen auf das Fahrzeug sind die Vorderquerseiten des Schlittens und der Schlitten-Führungsbasis in Vorwärtsfahrtrichtung des Fahrzeugs vorn, die Hinterquerseiten jeweils in Vorwärtsfahrtrichtung hinten, wenn der Lastenträger am Fahrzeug montiert ist.

Die elektrische Komponente, beispielsweise eine Heckleuchte, die am Lastenträger angeordnet ist, wird mit dem Schlitten in Richtung der Führungsbasis oder davon weg verfahren. Dabei muss die Elektro-Leitung mitgenommen werden, wobei sie mechanisch beansprucht wird. Weiterhin droht die Gefahr, dass die Elektro-Leitung zwischen den Schlitten und die Schlitten-Führungsbasis geklemmt und dabei möglicherweise beschädigt wird.

Eine vorteilhafte Verlegung der Elektro-Leitung sieht vor, dass die Elektro-Leitung zwischen dem Basis-Befestigungsort und dem Schlitten-Befestigungsort einen Schleifenabschnitt aufweist, der insbesondere in der Gebrauchsstellung eine Schleife bildet.

Die Schleife - vorzugsweise ist eine einzige Schleife vorgesehen - ermöglicht ein relativ weites Verstellen des Schlittens bezüglich der Schlitten-Führungsbasis. Die Schlitten-Führungsbasis oder ein Untergrund derselben kann auch durch einen Boden oder ein Blech der Karosserie des Fahrzeuges bereitgestellt werden.

Die Schleife hat zweckmäßigerweise eine große Ausdehnung, so dass ein großer Bewegungsfreiheitsgrad des Schlittens bezüglich der Schlitten-Führungsbasis vorhanden ist. Der Schlitten-Befestigungsort ist zweckmäßigerweise an oder im Bereich der Hinterquerseite des Schlittens vorgesehen. Bevorzugt ist die Elektro-Leitung stirnseitig mit dem Schlitten verbunden, wobei auch eine Verbindung nicht unmittelbar an der Stirnseite, sondern auch etwas davor möglich ist Der Basis-Befestigungsort ist zweckmäßigerweise an oder im Bereich der Vorderquerseite der Schlitten-Führungsbasis vorgesehen. Somit wird also der große Abstand zwischen einerseits der Hinterquerseite des Schlittens und andererseits der Vorderquerseite der Schlitten-Führungsbasis zur Ausbildung des Schleifenabschnittes genutzt, so dass die Schleife einen verhältnismäßig großen Radius zumindest in einer der Stellungen, in der Regel der Gebrauchsstellung des Schlittens, aufweist.

Der Schlitten-Befestigungsort und der Basis-Befestigungsort sind an oder im Bereich einander entgegengesetzter Längsseiten des Schlittens und der Schlitten-Führungsbasis zweckmäßig. Somit wird also auch die Querbreite des Lastenträgers genutzt, um einen großen Bewegungsraum für die Schleife zu schaffen.

Die Elektro-Leitung ist zweckmäßigerweise in einem Schutzschlauch angeordnet. Der Schutzschlauch kann auch dazu beitragen, dass die Elektro-Leitung eine gewisse Biegesteifigkeit aufweist, das heißt, dass die Schleife eine Tendenz aufweist, sich selbst zu strecken beziehungsweise eine gerade Ausrichtung einzunehmen. Somit stellt sich also die Elektro-Leitung sozusagen selbst zurück, während der Schlitten beim Verfahren bezüglich der Schlitten-Führungsbasis die Schleife formt oder umformt. Es versteht sich, dass auch andere Versteifungen, beispielsweise entsprechende Drahtversteifungen, im Innenraum oder am Außenumfang der Elektro-Leitung möglich sind, um diese gewisse Biegesteifigkeit zu schaffen. Zweckmäßigerweise ist eine Bodenfläche vorgesehen, auf der der Schleifenabschnitt aufliegt. Die Bodenfläche wird beispielsweise von einer Grundplatte der Schlitten-Führungsbasis bereitgestellt. Aber auch ein Bodenblech oder eine sonstige Oberfläche der Karosserie des Fahrzeuges kann die Bodenfläche bereitstellen. Beim Verstellen des Schlittens zwischen der Gebrauchsstellung und der Ruhestellung gleitet der Schleifenabschnitt auf der Bodenfläche entlang.

Die Schlitten-Führungsbasis weist zweckmäßigerweise Schienen auf, an denen Läuferschienen des Schlittens geführt sind.

Der Schleifenabschnitt ist zweckmäßigerweise in einem Zwischenraum zwischen den Führungsschienen angeordnet. Somit wird also außerhalb des Schlittens beziehungsweise außerhalb des Lastenträgers kein Bauraum benötigt. Die Elektro-Leitung wird zweckmäßigerweise von einer Längsseite der Schlitten-Führungsbasis her an einer der Führungsschienen vorbei in den Zwischenraum zwischen die Führungsschienen geführt.

Die Elektro-Leitung ist zweckmäßigerweise an einer der Läuferschienen oder einer der Führungsschienen befestigt.

Eine besonders bevorzugte Ausführungsform sieht vor, dass die Elektro-Leitung in einem Aufnahmekanal der Läuferschiene oder der Führungsschiene angeordnet ist. Der Aufnahmekanal wird zweckmäßigerweise von einer Verstärkungsrippe gebildet. Bevorzugt ist der Aufnahmekanal zur jeweils benachbarten Führungsschiene oder Läuferschiene hin offen. Dies bedeutet, dass der Aufnahmekanal sozusagen durch die jeweils andere Schiene überdeckt ist, was einen gewissen Schutz der Elektro-Leitung darstellt.

Zweckmäßigerweise ist die Elektro-Leitung an einem Längsende der Führungsschiene oder der Läuferschiene, etwa parallel zur Längsachse, in den Aufnahmekanal eingeführt. Dabei kann die Einführung schräg seitlich, das heißt an einer zur Längsachse etwa parallel verlaufenden Seite der jeweiligen Schiene erfolgen. Bevorzugt ist jedoch eine stirnseitige Einführung in den Aufnahmekanal.

Vorteilhaft weist der Lastenträger eine mindestens ein Halteglied aufweisende Halteeinrichtung auf, die in einer Haltestellung den Schlitten in mindestens einer Stellung bezüglich der Schlitten-Führungsbasis hält und in einer Freigabestellung den Schlitten zu einer Verstellung bezüglich der Schlitten-Führungsbasis freigibt.

Wenn die Halteeinrichtung den Schlitten freigibt, kann dieser beispielsweise von Hand verstellt werden, um die Haltestellung und/oder die Freigabestellung zu erreichen. Aber auch ein insbesondere elektrischer oder fluidtechnischer Antriebsmotor zum Verstellen des Schlittens ist vorteilhaft. Das mindestens eine Halteglied ist vorteilhaft durch eine Federanordnung in die Haltestellung federbelastet.

Die Halteeinrichtung weist zweckmäßigerweise einen mit einem Antriebsschalter schaltbaren elektrischen oder fluidischen, also motorischen, Halteantrieb zum Verstellen des mindestens einen Halteglieds in die Haltestellung und/oder die Freigabestellung auf. Der Halteantrieb kann z.B. einen Elektromagneten, einen Elektromotor und/oder einen fluidtechnischen Motor, z.B. pneumatischen Motor umfassen. Es ist aber auch möglich, dass das mindestens eine Halteglied manuell oder über einen manuell betätigbaren Halteantrieb verstellbar ist. Weiter kann der motorische oder manuelle Halteantrieb über ein Getriebe auf das Halteglied wirken, das auch zweckmäßigerweise einen Bestandteil des Halteantriebs bilden kann. Das Getriebe umfasst z.B. ein Zahngetriebe, ein Keilgetriebe oder dergleichen. Das Getriebe ist zweckmäßigerweise selbsthemmend, z.B. aufgrund einer passenden Schrägneigung einer Keilschräge und/oder mittels eines selbsthemmenden Spindeltriebs oder dergleichen.

Das Halteglied kann in einer bevorzugten Ausführungsform einen Riegel umfassen. Die Halteeinrichtung könnte man dann auch als Verriegelungseinrichtung bezeichnen. Es versteht sich, dass auch mehrere Riegel vorgesehen sein können.

Eine weitere Variante der Erfindung sieht vor, dass das Halteglied ein Formschlussglied umfasst, das zu einem Formschluss mit einer Formschlussgegenkontur, beispielsweise am Schlitten, ausgestaltet ist. Wenn das Formschlussglied formschlüssig in die Formschlussgegenkontur eingreift bzw. mit dieser in formschlüssigem Eingriff ist, wird dadurch der Halt des Schlittens relativ zur Schlitten-Führungsbasis bewirkt.

Aber auch ein Verklemmen oder Verspannen des Schlittens durch die Halteeinrichtung ist möglich, so dass dieser bezüglich der Schlitten-Führungsbasis verspannt bzw. verklemmt ist. In diesem Fall umfasst das Halteglied beispielsweise ein Spannelement.

Das Halteglied, beispielsweise der Riegel oder das Formschlussglied, greift vorteilhaft in der Haltestellung in die Führungsschienen und/oder die Läuferschienen ein. Wenn sowohl die Führungs- als auch die Läuferschienen durchgriffen sind, wird dadurch ein besonders fester relativer Halt des Schlittens bezüglich der Schlitten-Führungsbasis erzielt. Es ist aber auch möglich, dass das Halteglied einen Längsanschlag für eine oder beide der Läuferschienen bildet und/oder die Läuferschiene, vorteilhaft bezüglich der Längsachse, verspannt.

Der Lastenträger weist vorteilhaft mindestens eine Verstärkung auf, z.B. mit einer Metallplatte, insbesondere an einer Führungsschiene und/oder einer Läuferschiene. Die Verstärkung, z.B. ein u-Profil, ist zweckmäßigerweise mit der Basis, z.B. einer der Schienen, verklebt.

Der Lastenträger weist zweckmäßigerweise eine den Schlitten in die Gebrauchsstellung belastende Auswurf-Federanordnung auf. Es kann auch ein Schlittenantrieb mit beispielsweise einem elektrischen und/oder fluidtechnischen Motor zum Verstellen des Schlittens bezüglich der Schlitten-Führungsbasis vorgesehen sein.

Es versteht sich, dass die oben beschriebenen Führungsschienen und Läuferschienen sowie Distanzkörper auch bei einem Lastenträger zweckmäßig sind, der lösbar an einem Fahrzeug befestigbar ist, z.B. an einer Anhängekupplung des Fahrzeugs.

Nachfolgend werden Ausführungsbeispiele der Erfindung anhand der Zeichnung dargestellt. Es zeigen:
- Figur 1: eine schematische Schrägansicht eines Lastenträgers in Gebrauchsstellung, der in ein Heck eines in
- Figur 2: von hinten schematisch dargestellten Kraftfahrzeu- ges einfahrbar und aus diesem ausfahrbar ist,
- Figur 3: eine teilweise schematische Querschnittsansicht des Lastenträgers gemäß Figur 1 mit einer Halteeinrich- tung gemäß einer ersten Ausführungsform,
- Figur 4: eine Anordnung ähnlich wie Figur 3, jedoch mit ei- ner Halteeinrichtung in einer zweiten Ausführungs- form,

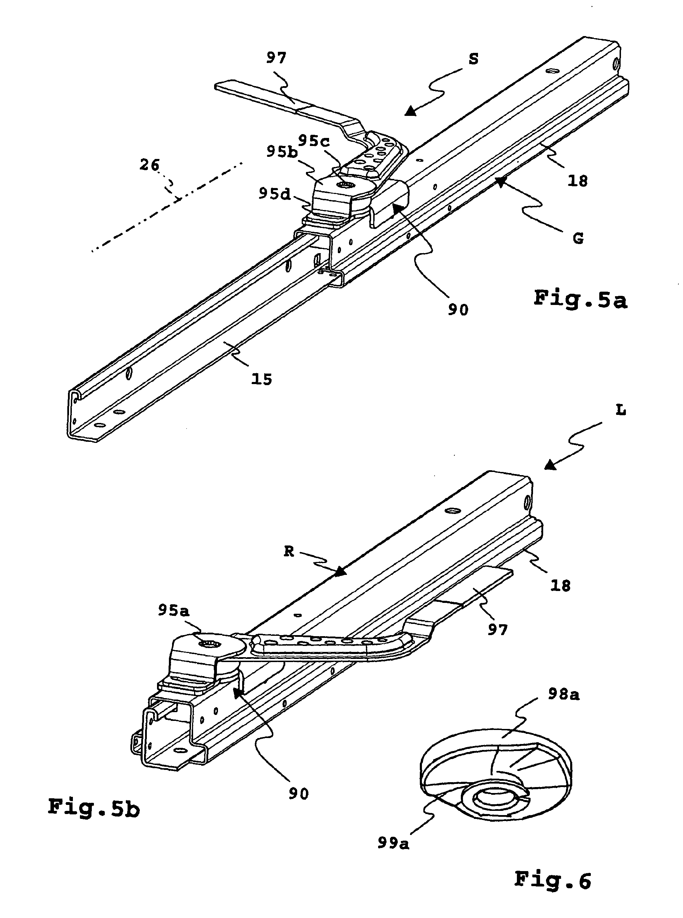

- Figur 5a: eine perspektivische Schrägansicht einer Spannein- richtung zum Verspannen einer Läufer- mit einer Führungsschiene des Lastenträgers gemäß Figur 1 in Spannstellung, die in
- Figur 5b: in Lösestellung dargestellt ist,
- Figur 6: einen Spannkörper eines Spanngetriebes der Spann- einrichtung gemäß Fig. 5a, 5b,
- Figur 7a: eine Frontalansicht der Spannanordnung gemäß Fig. 5a,
- Figur 7b: eine Frontalansicht der Spannanordnung gemäß Fig. 5b,
- Figur 8: eine Schlitten-Führungsbasis des Lastenträgers ge- mäß Fig. 1 in perspektivischer Schrägansicht mit Detaildarstellungen C, D und E gemäß einer ersten Ausführungsform,
- Figur 9a: den Schlitten gemäß Fig. 8 in einer ausgezogenen Position bezüglich einer Schlitten-Führungsbasis von oben,
- Fig. 9b: die Anordnung gemäß Fig. 9a, jedoch mit dem Schlit- ten in Ruhestellung,
- Figur 10: eine Frontalansicht und
- Figur 11: eine perspektivische Schrägansicht des Lastenträ- gers gemäß Fig. 9b,
- Figur 12: eine zweite Ausführungsform eines Schlittens, ähn- lich wie in Fig. 8, jedoch mit einer anderen Anord- nung von Gleit-Distanzkörpern,
- Figur 13a: eine eingefahrene und
- Figur 13b: eine ausgezogene Querschnittsansicht des Schlittens gemäß Fig. 12 entlang einer Schnittlinie F-F bezüg- lich einer Führungsbasis, die in
- Fig. 14: detaillierter perspektivisch dargestellt ist, wobei dort zusätzlich eine Elektro-Leitung zur elektri- schen Versorgung des Schlittens beziehungsweise da- ran angeordneter elektrischer Komponenten sichtbar ist,
- Figur 15a: eine Draufsicht des Schlittens gemäß Fig. 14 in ei- ner Ruhestellung und
- Figur 15b: die Anordnung gemäß Fig. 15a, jedoch mit dem Schlitten in Gebrauchsstellung.

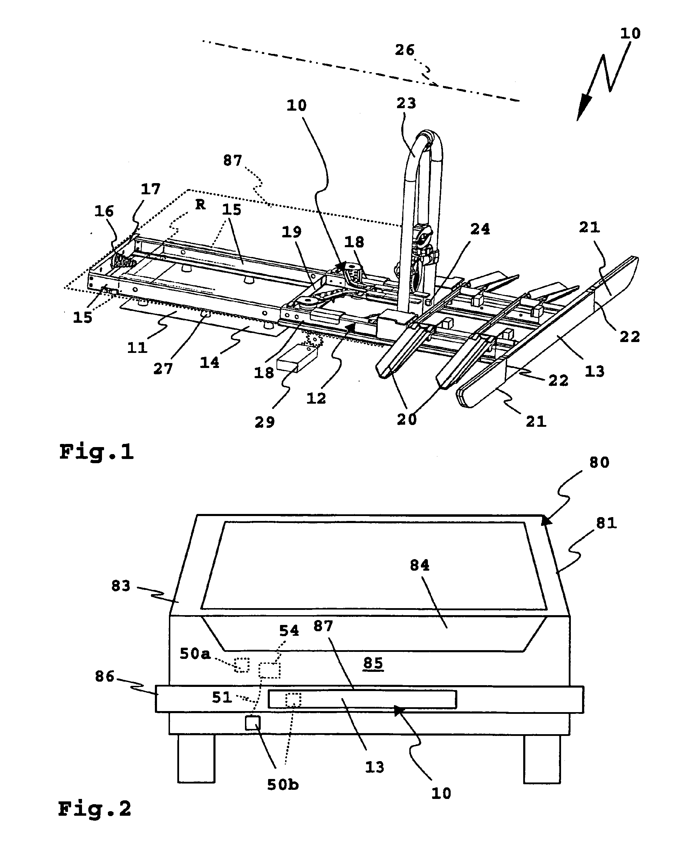

Ein Fahrzeug 80, z.B. ein PKW, hat eine Karosserie 81 und ist durch einen Antriebsmotor, beispielsweise einen Elektro- oder Verbrennungsmotor, antreibbar. An einem Heck 83 der Karosserie 81 befindet sich unter einem Deckel 84 ein Gepäckabteil 85 sowie ein Heckstoßfänger 86. Das Fahrzeug 80 ist beispielsweise ein Personenkraftwagen. Im Bereich des Heckstoßfängers 86 ist weiterhin eine Lastenträgeraufnahme 87 für einen Lastenträger 10, der in Figur 1 detaillierter dargestellt ist, vorgesehen. Die Lastenträgeraufnahme 87 ist eine Art Tasche oder Ausnehmung, in der eine Schlitten-Führungsbasis 11 des Lastenträgers 10, angeordnet ist. An der Schlitten-Führungsbasis 11 ist ein Schlitten 12 längsverschieblich entlang einer Längsachse 26 (z.B. einer X-Achse) geführt, so dass er zwischen einer Gebrauchsstellung G (ausgezogen dargestellt), in der er vor das Heck 83 des Fahrzeugs 80 vorsteht und mit einer Last beladbar ist, und einer Ruhestellung R (gestrichelt angedeutet) verstellbar ist, wobei der Schlitten 12 in der Ruhestellung R in einem Innenraum bzw. in der Lastenträgeraufnahme 87 aufgenommen ist, so dass er nicht vor das Heck 83 vorsteht.

In der Ruhestellung R fluchtet ein Kennzeichenträger 13 des Schlittens 12 etwa mit dem Heckstoßfänger 86, so dass er quasi einen Bestandteil desselben bildet.

Die Schlitten-Führungsbasis 11 weist vorliegend eine Halteplatte 14 auf, an deren Oberseite Führungsschienen 15 angeordnet sind, die zueinander parallel sind. Die Führungsschienen 15 sind zweckmäßigerweise auf Stützen 27 angeordnet, könnten aber auch unmittelbar auf der Halteplatte 14 befestigt sein. Es versteht sich, dass die Halteplatte 14 nur beispielhaft für eine Befestigungseinrichtung steht, mit denen die Führungsschienen 15 am Fahrzeug 80 befestigbar sind. Man kann die Führungsschienen 15 oder die Stützen 27 auch unmittelbar an einem Karosseriebauteil des Fahrzeugs 80 befestigen.

Ein etwa am Boden bzw. in Fahrtrichtung des Fahrzeugs 80 vorn gelegener Endbereich der Führungsschienen 15 ist durch einen Querträger 16 verbunden, so dass insgesamt durch die Führungsschienen 15 und den Querträger 16 eine U-förmige Anordnung getroffen ist. Ein weiterer Querträger 25 verbindet die Führungsschienen 15 in einem Längsabstand zum Querträger 16, vorzugsweise in der Nähe des anderen Endbereichs der Führungsschienen 15.

Der Querträger 25 ist mit den Führungsschienen 15 an deren Unterseite verbunden. Der Querträger 16 hingegen bildet eine Stirnwand der Schlitten-Führungsbasis 11.

Vor dem Querträger 16 steht eine Auswurf-Feder 17 in Richtung des Schlittens 12 vor, die den Schlitten 12 in seiner Ruhestellung R in Richtung der Gebrauchsstellung G beaufschlagt.

Es ist aber auch möglich, dass ein elektrischer und/oder fluidtechnischer Schlittenantrieb zum Verstellen des Schlittens 12 in seine Ruhestellung R und/oder in Richtung der Gebrauchsstellung G vorgesehen ist, z.B. ein Riemen- oder Seilantrieb, ein pneumatischer, insbesondere doppeltwirkender Zylinder, ein Elektromotor oder dergleichen. Beispielsweise ist als ein Schlittenantrieb 29 ein Elektromotor vorgesehen, der die Läuferschienen 18 antreibt, z.B. mit einem Antriebsritzel mit an den Läuferschienen 18 angeordneten Zahnungen kämmt.

Der Schlitten 12 hat eine in Draufsicht im Wesentlichen rechteckige Gestalt. Dabei werden zwei Längsseiten dieses Rechteckes von Läuferschienen 18 gebildet, die an den Führungsschienen 15 geführt und längsverschieblich sind. Die Läuferschienen 18 sind auf der dem Querträger 16 zugewandten Seite durch einen Querträger 19 miteinander verbunden, auf den die Auswurf-Feder 17 in der Ruhestellung R wirkt. Am heckseitigen Ende des Schlittens 12, d.h. entgegengesetzt zum Querträger 19, befindet sich der Kennzeichenträger 13, der die Läuferschienen 18 miteinander verbindet.

Der Schlitten 12 bildet eine Tragbasis zum Auflegen von Lasten, beim Ausführungsbeispiel Fahrrädern. Diese sind auf Trägerrinnen 20 aufstellbar, die schwenkbeweglich an den Läuferschienen 18 gelagert sind. Die Trägerrinnen 20 können zwischen die Läuferschienen 18 in eine Nichtgebrauchsstellung geschwenkt werden, in der der Schlitten 12 in Richtung der Schlitten-Führungsbasis 11, d.h. in die Ruhestellung R, verstellbar ist. Zu diesem Zweck werden auch Leuchten 21, die beispielsweise Bremslichter, Blinker, Rückfahrscheinwerfer und dergleichen umfassen, in Richtung der Läuferschienen 18 geschwenkt, wofür Schwenklager 22 zwischen dem Kennzeichenträger 13 und den Leuchten 21 vorgesehen sind.

Weiterhin ist es möglich, zum Verstellen des Schlittens 12 in die Ruhestellung R einen Träger 23, beispielsweise in Gestalt eines U-Bügels, in den Zwischenraum zwischen die Läuferschienen 18 zu schwenken, wofür Schwenklager 24 vorgesehen sind. Dann ist also auch der Träger 23 platzsparend untergebracht, so dass der Schlitten 12 in die Lastenträgeraufnahme 87 passt.

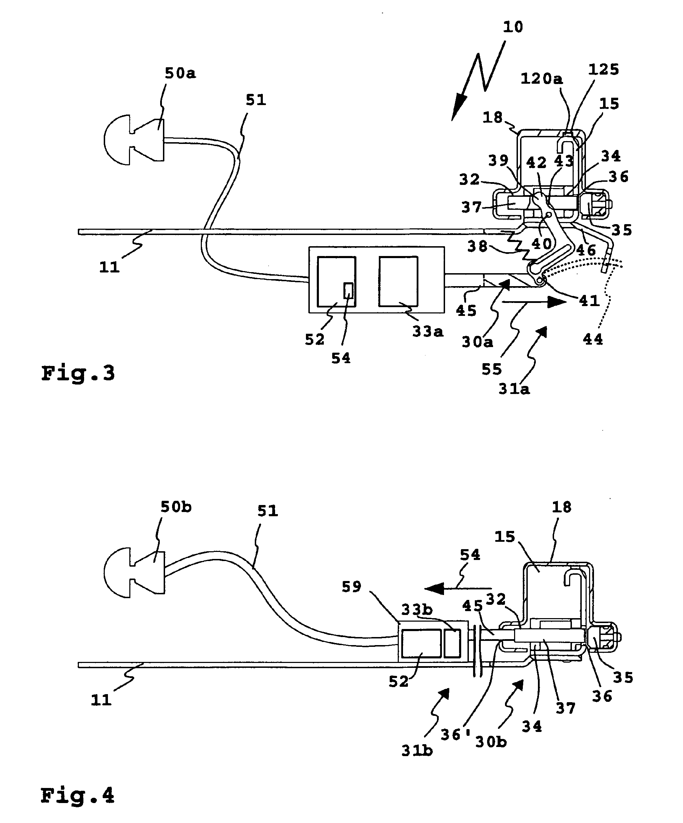

Zum Halten des Schlittens 12 in der Gebrauchsstellung G und/oder der Ruhestellung R, sind beispielhaft in den Figuren 3 und 4 dargestellte Halteeinrichtungen 30a, 30b vorgesehen. Die Halteeinrichtungen 30a, 30b sind vorliegend als Verriegelungseinrichtung 31a, 31b ausgestaltet und haben als Halteglieder 37 dienende Riegel 32, die durch elektrische Halteantriebe 33a, 33b betätigbar sind. Die Halteglieder 37 oder Riegel 32 sind an Lagern 34 schiebebeweglich zwischen einer Haltestellung oder Verriegelungsstellung, in der sie in Halteaufnahmen 35 des Schlittens 12 eingreifen, und einer Freigabestellung (in Figuren 3 und 4 dargestellt) verstellbar, in der die Riegel 32 außer Eingriff mit den Halteaufnahmen 35 sind, so dass der Schlitten 12 bezüglich der Schlitten-Führungsbasis 11 längsverschieblich ist, z.B. zum Verstauen in der Lastenträgeraufnahme 87.

Die Riegel 32 sind quer zur Auszugsrichtung bzw. Laufrichtung des Schlittens 12 bezüglich der Schlitten-Führungsbasis 11 angeordnet und vorliegend als eine Art Stift ausgestaltet.

Beispielsweise befindet sich das Lager 34 an den einer der Führungsschienen 15, in der Zeichnung beispielsweise der in Fahrtrichtung rechten Führungsschiene 15, und ist so positioniert, dass der Riegel 32 mit einem Seitenschenkel der Läuferschiene 18 in der Verriegelungsstellung zusammenwirkt, z.B. in der Haltestellung in eine dort angeordnete Halteaufnahme 35 eingreift.

Einen optimalen Halt erzielt man vorliegend dadurch, dass das Lager 34 nicht nur unterhalb der Führungsschiene 15, sondern innerhalb derselben, d.h. in deren Innenraum, angeordnet ist. Somit greift der Riegel 32 in der Verriegelungsstellung oder Haltestellung nicht nur in die Halteaufnahme 35 ein, sondern durchgreift auch eine in der Ruhestellung R oder der Gebrauchsstellung G mit der Halteaufnahme 35 fluchtende Halteaufnahme 36 an der Führungsschiene 15. Dadurch sind die Schienen 15, 18 gegeneinander in Auszugsrichtung des Schlittens 12 bezüglich der Schlitten-Führungsbasis 11 verriegelt.

Der Riegel 32 der Halteeinrichtung 31b kann in der Lösestellung ganz aus der Läuferschiene 18 heraus verstellt werden (in Figur 4 nach links). Alternativ kann eine der Halteaufnahme 36 gegenüberliegende Halteaufnahme 36' auch als Langloch ausgestaltet sein.

Die Riegel 32 bilden Halteglieder zum ortsfesten Halten des Schlittens 12 bezüglich der Schlitten-Führungsbasis 11 bzw. des Fahrzeuges 80.

Es versteht sich, dass nicht nur an einem Schienenpaar 28 aus Schienen 15, 18, sondern auch an beiden, zueinander parallelen Schienenpaaren 28 jeweils Halteeinrichtungen 30a oder 30b vorgesehen sein können. Weiterhin ist es möglich, dass auch in Auszugsrichtung des Schlittens 12 mehrere Halteeinrichtungen in der Art der Halteeinrichtungen 30a, 30b hintereinander angeordnet sind.

Der Riegel 32 wird durch eine Feder 38 in seine Verriegelungsstellung oder Haltestellung belastet. Die Feder 38 ist einerseits an der Schlitten-Führungsbasis 11 und andererseits an einem Betätigungshebel 39 befestigt, der den Riegel 32 betätigt. Der Betätigungshebel 39 ist schwenkbeweglich an einem Schwenklager 40 gelagert. Die Feder 38 sowie der Halteantrieb 33a greifen an einem Betätigungsende 41 des vorliegend winkeligen Betätigungshebels 39 an. Der Betätigungshebel 39 hat neben dem Betätigungsende 41 ein Wirkende 42, das in eine Aufnahme 43 des Riegels 32 eingreift. Das Wirkende 42 und das Betätigungsende 41 sind an einander entgegengesetzten Seiten bezüglich des Schwenklagers 40 angeordnet. Wird der Betätigungshebel 39 um das Schwenklager 40 geschwenkt, nimmt er den Riegel 32 in die Verriegelungsstellung oder die Entriegelungsstellung bzw. Freigabestellung mit.

Während ein Abtrieb 45 des Halteantriebs 33a am Betätigungsende 41 des Betätigungshebels 39 angreift, dort zweckmäßigerweise schwenkbeweglich gelagert ist, und nur in Richtung einer Verstellung 55 des Riegels 32 in die Freigabestellung wirksam ist (in Gegenrichtung wirkt die Feder 38), betätigt ein Abtrieb 45 des Halteantriebs 33b den Riegel 32 sowohl in die Haltestellung oder Verriegelungsstellung als auch in die Freigabestellung, die in Figur 4 dargestellt ist.

Zweckmäßigerweise hat eine Halteeinrichtung eines erfindungsgemäßen Lastenträgers eine manuell betätigbare Notbetätigung, z.B. einen Bowdenzug, der auf das Halteglied wirkt. Beispielhaft ist eine auf den Betätigungshebel 39 wirkende Notbetätigung 44 in Figur 3 eingezeichnet. Die Notbetätigung 44 ist zweckmäßigerweise an einem Halter 46 befestigt.

Die Halteantriebe 33a, 33b sind bequem betätigbar. Die Halteantriebe 33a, 33b lassen sich durch Antriebsschalter 50a, 50b bequem betätigen: Die Antriebsschalter 50a, 50b sind frei am Fahrzeug 80 positionierbar, beispielsweise am Heck 83. Die Antriebsschalter 50a, 50b sind vorliegend elektrische Schalter, die über Leitungen 51 mit einer Steuerung 52 verbunden sind, die ihrerseits wiederum die Halteantriebe 33a, 33b ansteuert. Beispielsweise ist der Antriebsschalter 50a im Gepäckabteil 85 angeordnet. Der Antriebsschalter 50b hingegen ist unmittelbar in der Nähe des Lastenträgers 10, d.h. am Heck 83 in einem Außenbereich des Fahrzeuges 80 positioniert. Der Antriebsschalter 50b befindet sich in der Darstellung gemäß Figur 2 beispielsweise unterhalb des Heckstoßfängers 86, d.h. in einem gegen Sicht abgedeckten Bereich. Eine bevorzugte Anordnung des Antriebsschalters 50b sieht vor, dass dieser hinter dem Kennzeichenträger 13 angeordnet ist oder am Kennzeichenträger 13 angeordnet ist, d.h. unmittelbar am Schlitten 12. Wenn nunmehr ein Bediener den Antriebsschalter 50b betätigt, ist er direkt in der Nähe des Schlittens 12, so dass dieser nicht unbeaufsichtigt aus dem Heck 83 des Fahrzeuges 80 ausfahren kann, beispielsweise wenn das Heck hangabwärts steht.

Die Steuerung 52 kontrolliert zweckmäßigerweise Aktivierungsbedingungen, die ein Ansteuern des Halteantriebs 33a, 33b mit den Antriebsschaltern 50a oder 50b ermöglichen, mithin also ein Entriegeln oder Lösen des Schlittens 12 bezüglich der Schlitten-Führungsbasis 11 oder des Fahrzeugs 80. Weiterhin ermöglicht die Steuerung 52 eine Funktionsanzeige der Halteeinrichtungen 30a, 30b, so dass eine Bedienperson jederzeit über deren Zustand, beispielsweise Fehlerzustand oder Funktionszustand, Kenntnis haben kann.

Beispielsweise ist eine akustische Funktionsanzeige vorteilhaft. So kann die Steuerung 52 beispielsweise eine optische und/oder akustische Funktionsanzeigeeinrichtung 54 umfassen, zum Beispiel eine LED-Anordnung oder einen Lautsprecher, der bei einem Fahrbetrieb des Halteantriebs 33a, 33b ein Funktionsgeräusch, beispielsweise eine pulsierende Tonfrequenz, ausgibt. Ist die Verriegelung erfolgreich verlaufen, quittiert dies die Funktionsanzeigeeinrichtung 54 mit einem Dauerton für eine vorbestimmte Zeit. Es versteht sich, dass die Steuerung 52 auch einen Lautsprecher des Fahrzeugs 80 vorteilhaft ansteuern kann (nicht dargestellt), z.B. einen Lautsprecher eines Audiosystems.

Eine Sicherheitsmaßnahme kann vorsehen, dass die Steuerung 52 den Halteantrieb 33a, 33b nur während einer Betätigung des jeweiligen Antriebsschalters 50a oder 50b bestromt, das heißt, dass der Verriegelungsvorgang oder Entriegelungsvorgang beim Loslassen des jeweiligen Antriebsschalters 50a, 50b abgebrochen wird. Dabei kann es vorteilhaft sein, wenn die Steuerung 52 den Halteantrieb 33a, 33b zu einer Entriegelungsbewegung 53 beziehungsweise Entriegelung ansteuert.

Die Führungsschienen 15 bilden Tragprofile zum Tragen der bezüglich der Schlitten-Führungsbasis 11 sozusagen ausziehbaren Läuferschienen 18, die man daher auch als Auszugsprofile bezeichnen kann. Jedenfalls sind die Führungsschienen 15 und die Läuferschienen 18 jeweils einstückig, wobei ihre Querkontur durch Umkanten, Umfalzen oder Umbiegen einzelner Abschnitte eines Grundkörpers beziehungsweise Ausgangsmaterials gebildet ist, zweckmäßigerweise einer Stahlplatte (als Grundkörper).

Es versteht sich, dass man die Führungsschienen 15 und/oder die Läuferschienen 18 auch als Strangpressprofile mit Vorteil herstellen kann. Weiterhin können erfindungsgemäße Läufer-und/oder Führungsschienen nicht nur aus Metall, beispielsweise aus Stahlblech wie im vorliegenden Fall, sondern selbstverständlich auch aus Kunststoff sowie Verbundwerkstoffen, Faserwerkstoffen und dergleichen hergestellt werden.

In jedem Fall ist eine hohe Stabilität bei gleichzeitig guter Leichtgängigkeit und Belastbarkeit der Führungsschienen und Läuferschienen gemäß der Erfindung realisiert, in besonderem Maße bei der Ausgestaltung gemäß der nachfolgenden Beschreibung:

Die Führungsschienen 15 sind mit einem Befestigungsschenkel 60 auf der Halteplatte 14, die somit auch eine Bodenplatte bildet, befestigt. Der Befestigungsschenkel 60 ist verhältnismäßig breit, was eine Befestigung unmittelbar an einem Karosseriebauteil des Fahrzeugs 80, beispielsweise einem Boden der Lastenträgeraufnahme 87, erleichtert.

Von dem Befestigungsschenkel 60 steht ein Stützschenkel 61 winkelig ab, vorliegend rechtwinkelig. Der Befestigungsschenkel 60 und der Stützschenkel 61 bilden zweckmäßigerweise eine L-förmige Anordnung. Es wäre aber denkbar, dass beispielsweise der Stützschenkel 61 bezüglich des Befestigungsschenkels 60 spitzwinkelig oder stumpfwinkelig verläuft, somit also beispielsweise zu einer Vertikalen eine Schrägneigung aufweist.

Sozusagen als Lauffläche oder Lagerfläche für den Schlitten 12 steht ein Auflagerschenkel 62 zur Verfügung, der winkelig vom Stützschenkel 61 absteht. Der Auflagerschenkel 62 und der Befestigungsschenkel 60 verlaufen im Wesentlichen parallel zueinander. Der Auflagerschenkel 62 steht rechtwinkelig vom Stützschenkel 61 ab.

Vom Auflagerschenkel 62 steht weiterhin ein Verstärkungsschenkel 63 winkelig ab, vorliegend rechtwinkelig. Es versteht sich, dass der Verstärkungsschenkel 63 auch stumpf- oder spitzwinkelig bezüglich des Auflagerschenkels 62 sein könnte, so dass eine durch den Stützschenkel 61, den Auflagerschenkel 62 und den Verstärkungsschenkel 63 gebildete Aufnahme 64 etwa U-förmig ist. Es versteht sich, dass anstelle der Aufnahme 64 auch eine etwa V-förmige Aufnahme vorgesehen sein kann, das heißt, dass beispielsweise der Verstärkungsschenkel 63 nicht im Wesentlichen parallel zum Stützschenkel 61 verläuft, sondern zu diesem schräg, wobei eine freie Unterseite des Verstärkungsschenkels 63 zum freien Querende des Befestigungsschenkels 60 gerichtet ist.

Der Verstärkungsschenkel 63 ist quer zur Längsachse 26 beziehungsweise Längserstreckungsrichtung der Führungsschiene 15 kurz. Beispielsweise beträgt eine Höhe des Verstärkungsschenkels 63 (bezogen auf die Längsachse 26) nur etwa 10 bis 40 %, vorzugsweise etwa 20 %, der Höhe des Stützschenkels 61. Somit ist also unterhalb des Auflagerschenkels 62 und weiterhin unterhalb des Verstärkungsschenkels 63 ein Freiraum 65 vorhanden, der für später noch erläuterte Zwecke nutzbar ist. Beispielsweise ist die U-förmige Aufnahme 64 als eine Führungsnut 66 nutzbar.

Eine freie Oberseite der Führungsschiene 15 dient zum Auflegen und Lagern der Läuferschiene 18, das heißt, die Außenseite des Auflagerschenkels 62 bildet eine Lagerfläche 67.

An der vom Verstärkungsschenkel 63 abgewandten Seite hat der Stützschenkel 61 weiterhin eine Führungsfläche 68 zum seitlichen Führen der Läuferschiene 18.

Die Läuferschienen 18 sind an den Führungsschienen 15 gelagert und auf diese aufgelegt. Jedenfalls begrenzen die Läuferschienen 18 einen im Wesentlichen U-förmigen Innenraum 75.

Die Läuferschienen 18 haben eine Hut- oder Omega-förmige Gestalt.

Die Läuferschienen 18 weisen einen Grundschenkel 70 auf, von dem Seitenschenkel 71a, 71b winkelig, vorliegend rechtwinkelig, abstehen. Insofern wird also dadurch eine U-förmige Querschnittskontur gebildet.

Der Grundschenkel 70 bildet zudem einen Lagerschenkel 72 zum Lagern der Läuferschienen 18 an den Führungsschienen 15. Eine dem Innenraum 75 zugewandte Unterseite oder Innenseite des Lagerschenkels 72 weist eine Lagerfläche 77 auf, die an sich zum Lagern auf der Lagerfläche 67 des Auflagerschenkels 62 geeignet ist. Die Lagerflächen 67, 77 könnten beispielsweise mit einer Gleitbeschichtung versehen sein. Der Führungsfläche 68 der Führungsschiene 15 ist eine weitere Innenfläche der Läuferschiene 18 zugewandt, nämlich eine Schienenfläche 78. Die freien Querendbereiche der Läuferschiene 18 sind mit Verstärkungsrippen 79 versehen. Die Verstärkungsrippen 79 werden von Vorsprungschenkeln 73a, 73b gebildet, die durch eine Grundwand 74 miteinander verbunden sind. Der Vorsprungschenkel 73a steht winkelig von der Grundwand des Seitenschenkels 71 ab, vorliegend rechtwinkelig. Der Vorsprungschenkel 73b verläuft parallel zum Vorsprungschenkel 73a. Die Grundwand 74 und die Seitenschenkel 71a oder 71b sind ebenfalls parallel zueinander.

Die Verstärkungsrippen 79 sind zur zugeordneten Führungsschiene 15 hin offen, das heißt zum Innenraum 75 hin geöffnet. Dort begrenzen die Verstärkungsrippen 79 jeweils einen Aufnahmekanal 76 zur Aufnahme verschiedenartigster Komponenten, beispielsweise Elektro-Leitungen, Führungselementen oder dergleichen. Der Aufnahmekanal 76 kann auch zur Aufnahme einer Zahnschiene genutzt werden, beispielsweise zur Zusammenwirkung mit dem Schlittenantrieb 29 (in einer anders ausgestalteten Ausführungsform der Erfindung).

Mit den Halteeinrichtungen 30a, 30b ist der Schlitten 12 in der Ruhestellung R oder der Gebrauchsstellung G verriegelbar. Eine vorteilhafte Spannfunktion der Halteeinrichtungen 30a, 30b, die zum spielfreien Halt des Schlittens 12 in der Ruhestellung R beiträgt, wird später noch beschrieben.

Zu einem sicheren, spielfreien Halt des Schlittens 12 bezüglich der Schlitten-Führungsbasis 11 insbesondere in der Gebrauchsstellung G dienen Spanneinrichtungen 90, mit denen eine oder wie beim Ausführungsbeispiel beide Schienenpaare 28, die jeweils eine Führungsschiene 15 und eine Läuferschiene 18 umfassen, paarweise gegeneinander verspannbar sind.

Die Spanneinrichtungen 90 umfassen einen Spannkörper 91, der im Innenraum 75 der Läuferschiene 18 angeordnet ist. Der Spannkörper 91 greift mit einem Spannbacken 92 in die U-förmige Aufnahme 64 der Führungsschiene 15 ein. Weiterhin greift der Verstärkungsschenkel 63 in eine Nut 93 des Spannkörpers 91 ein. Der Spannkörper 91 hat eine Längsgestalt, das heißt, er erstreckt sich parallel zur Längserstreckungsrichtung des Schienenpaares 28 beziehungsweise parallel zur Längsachse 26.

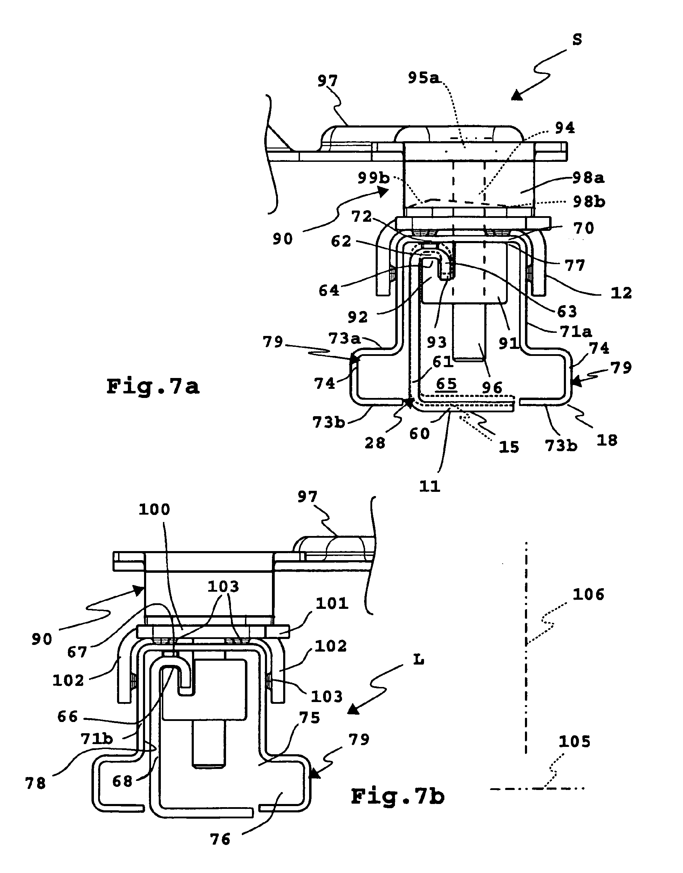

Der Spannbacken 92 bildet einen Nutfolger, der in der U-förmigen Aufnahme 64, mithin also der Führungsnut 66, geführt ist. Auch die Nut 93 kann als Führungsnut ausgestaltet sein, wobei dann der Verstärkungsschenkel 63 sozusagen der Nutfolger ist und in die Nut 93 eingreift. Somit bildet also der Spannkörper 91 ein Führungselement zum Führen der Läuferschiene 18 an der Führungsschiene 15. Allerdings ist so viel Spiel in den Nuten bzw. Führungsnuten 66, 93 vorhanden, dass der Schlitten 12 mit relativ wenig Kraftaufwand entlang der Längsachse 26 verstellt werden kann, wenn die Spanneinrichtung 90, wie in Fig. 7b dargestellt, ihre Lösestellung L einnimmt.

In einer Spannstellung S hingegen ist der Spannkörper 91 mittels eines Zugankers 94 gegen die Führungsschiene 15 gespannt. Dabei greift der Spannbacken 92 in die Aufnahme 64 ein. Der Zuganker 94 stützt sich mit seinem Kopf, der somit einen Widerlagerkörper 95a bildet, dabei indirekt auf der Oberseite beziehungsweise der dem Innenraum 75 abgewandten Außenseite des Grundschenkels 70 ab. Der Zuganker 94 ist beispielsweise als ein Schraubbolzen ausgestaltet, dessen Bolzenabschnitt 96 in den Spannkörper 91 eingeschraubt ist.

Nun könnte eine Ausführungsform vorsehen, dass ein Betätigungshebel 97 der Spanneinrichtung 90 mit dem Widerlagerkörper 95a beziehungsweise Kopf des Zugankers 94 drehfest verbunden ist, so dass durch Ein- und Ausschrauben des Zugankers 94 in den und aus dem Spannkörper 91 eine Auf- und Abbewegung des Spannkörpers 91 in die Spannstellung S oder die Lösestellung L möglich ist. In diesem Zusammenhang erweist es sich als vorteilhaft, dass der Freiraum 65 einen entsprechenden Bewegungsspielraum für den Spannkörper 91 bereitstellt.

Bei den Ausführungsbeispielen ist jedoch eine andere Konfiguration getroffen:

Der Zuganker 94 ist zwar in den Spannkörper 91 eingeschraubt, wodurch ein Abstand seines Kopfs zum Spannkörper 91 festgelegt ist, wird aber dann durch eine Verdrehsicherung 95b, in deren Aufnahme 95c der Kopf des Zugankers 94 verdrehfest aufgenommen ist, verdrehfest gehalten. Die Verdrehsicherung 95b kann aufgrund eines um die Aufnahme 95c bogenförmig verlaufenden Langlochs 95d in mehreren Winkelstellungen, bezüglich der Läuferschiene 18 verdrehfest mittels einer nicht dargestellten Schraube befestigt werden.

Der Betätigungshebel 97 ist drehfest mit einer Spannscheibe 98a verbunden, während eine Spannscheibe 98b drehfest mit der Läuferschiene 18 verbunden ist. Die Spannscheiben 98a, 98b haben zusammenwirkende Spannkonturen 99a beziehungsweise Gegenkonturen 99b. Die Konturen 99a, 99b haben in Umfangsrichtung der jeweiligen Spannscheibe 98a, 98b verlaufende Erhebungen beziehungsweise Vertiefungen, so dass bei einem relativen Verdrehen der Spannscheiben 98a, 98b der Spannkörper 91 und der Widerlagerkörper 95a relativ näher zueinander hin oder weiter voneinander weg bewegt werden, mithin also in die Spannstellung S oder die Lösestellung L gelangen.

Nun wäre es denkbar, dass der Widerlagerkörper 95a, gegebenenfalls auch die Spannscheiben 98a, 98b, unmittelbar auf die Läuferschiene 18 wirken, beispielsweise deren Grundschenkel 70. Die Läuferschiene 18 ist jedoch durch einen Stützkörper 100 im Bereich der Spanneinrichtung 90 verstärkt. Der Stützkörper 100 hat eine im Querschnitt U-förmige Gestalt, die durch eine Deckplatte 101 gebildet wird, von der Seitenschenkel 102 seitlich abstehen. Die Seitenschenkel 102 sind den Seitenschenkeln 71a, 71b zugeordnet, die Deckplatte 101 stützt sich auf dem Grundschenkel 70 ab.

Eine nicht dargestellte Ausführungsform kann beispielsweise vorsehen, dass der Stützkörper 100, vorzugsweise aus Metall bestehend, auf die Läuferschienen 18 aufgeschraubt oder an diese angeschweißt ist. Vorzugsweise wird jedoch der Stützkörper 100 mit der Läuferschiene 18 verklebt. In der Zeichnung sind Klebepunkte 103 dargestellt, die an der der Läuferschiene zugewandten Innenseite des Stützkörpers 100 vorgesehen sind. Es versteht sich, dass anders als in der Darstellung gemäß Fig. 7a, 7b der Stützkörper 100 im montierten beziehungsweise verklebten Zustand zweckmäßigerweise flächig mit der Außenseite beziehungsweise den Außenflächen der Läuferschiene 18 verbunden ist, so dass abgesehen von dem Klebstoff zwischen den beiden Komponenten kein oder nur ein äußerst geringer Abstand vorhanden ist. Der Stützkörper 100 ist quasi auf die Läuferschiene 18 aufgesattelt und verstärkt sie dort, wo die Spanneinrichtung 90 wirkt.

Der Zuganker 94 durchdringt also die Spannscheiben 98a, 98b, die insgesamt ein Spanngetriebe bilden, sowie zudem eine in der Zeichnung nicht sichtbare Bohrung am Stützkörper 100 und dem Grundschenkel 70 der Läuferschiene 18.

Die Führungsschiene 15 hingegen ist durch den Zuganker beziehungsweise die Spanneinrichtung 90 insgesamt nicht geschwächt. Vielmehr ist der Zuganker 94 am Verstärkungsschenkel 63 vorbeigeführt, so dass weder der Auflagerschenkel 62 noch der Verstärkungsschenkel 63 durch die Spanneinrichtung 90 geschwächt sind. Diese Maßnahme ist vorteilhaft im Hinblick auf eine hohe Belastbarkeit des Lastenträgers 10 beim Fahrbetrieb des Fahrzeugs 80.

Insbesondere im Zusammenhang mit der manuellen Handhabung, das heißt dem manuellen Ausziehen des Schlittens 12 von der Schlitten-Führungsbasis 11 weg beziehungsweise beim Schieben zu dieser hin, ist eine Leichtgängigkeit des Schlittens 12 bezüglich der Führungsschienen 15 vorteilhaft:

Hierfür ist zumindest für Längspositionen des Schlittens 12 zwischen der Ruhestellung R und der Gebrauchsstellung G ein Spiel zwischen den Schienenpaaren 28 vorhanden.

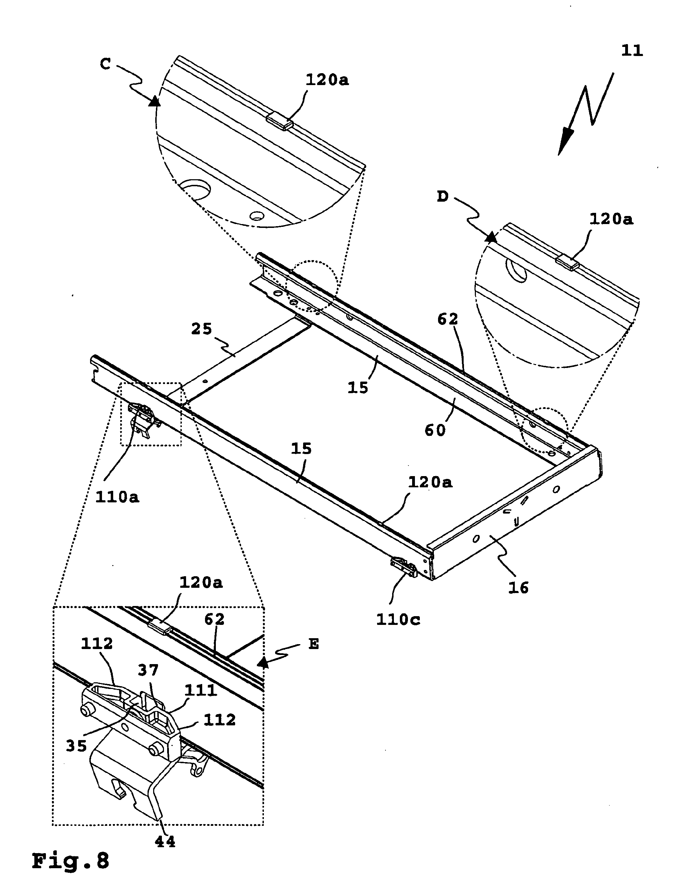

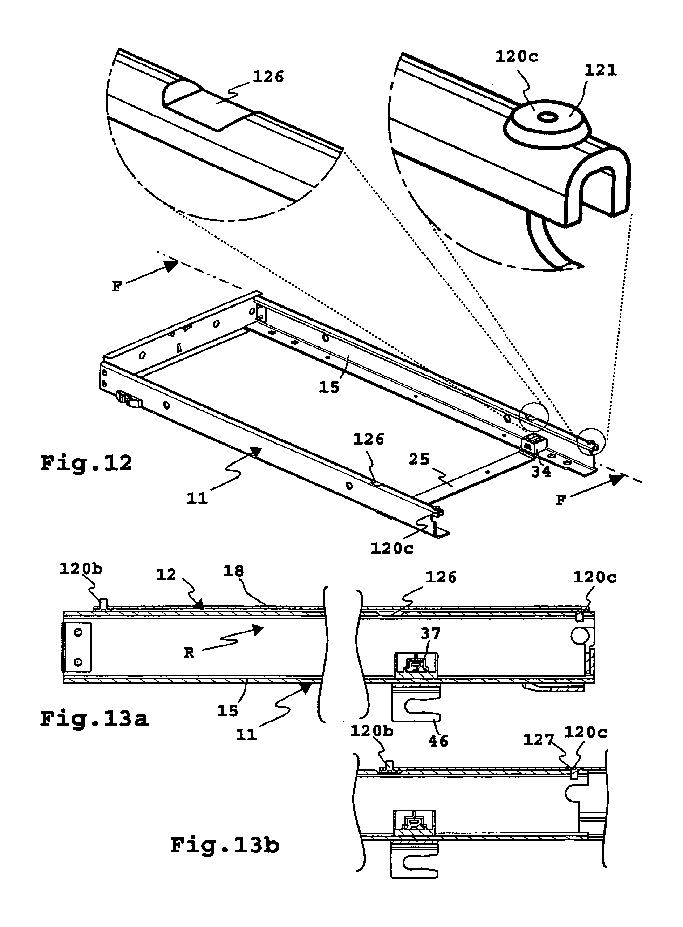

Zur Verbesserung der Gleiteigenschaften bzw. der Verringerung der Reibkraft in vertikaler Richtung, das heißt bezüglich einer Vertikal-Querachse 106 (einer vertikalen, zur Längsachse 26 quer verlaufenden Achse oder Z-Achse), sind Gleitkörper vorgesehen, wobei in den Fig. 8 bis 11 eine erste und in Figur 12 bis 13 eine zweite Ausführungsform dargestellt sind.

Bezüglich eines horizontalen Spiels bezogen auf eine Horizontal-Querachse 105 (einer horizontalen, zur Längsachse 26 quer verlaufenden Achse oder auch Y-Achse) zwischen den Schienen 15, 18 ist jedoch dieselbe Lösung gewählt:

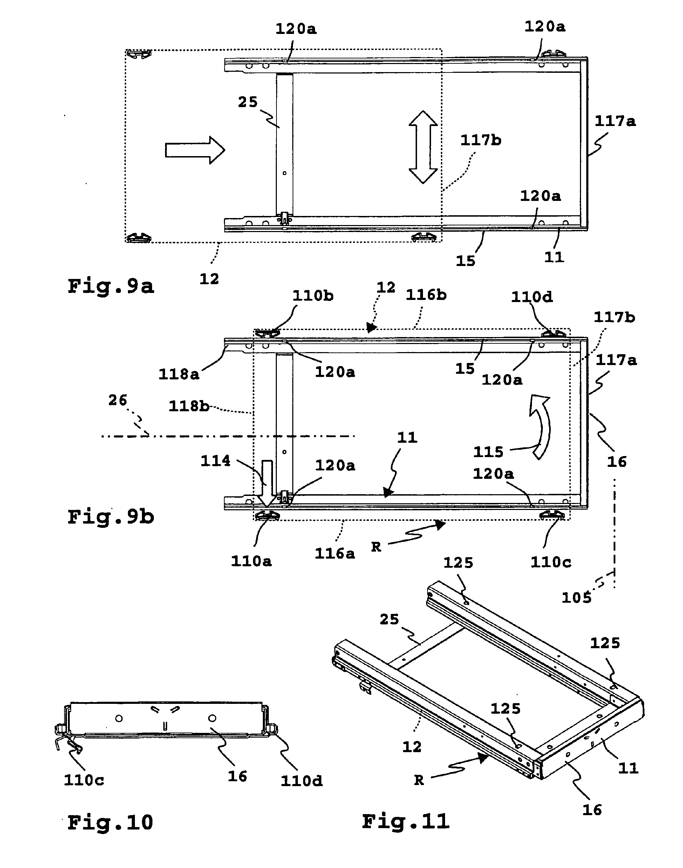

Am Schlitten 12, der in Draufsicht eine im Wesentlichen rechteckige Kontur aufweist, sind drei Distanzkörper 110a-110c angeordnet. Hingegen ist ein vierter Distanzkörper 110d an der Schlitten-Führungsbasis 11 angeordnet. Die Distanzkörper 110a-110d befinden sich in Eckbereichen eines Rechteckes (siehe Fig. 9b), wenn der Schlitten 12 auf die Schlitten-Führungsbasis 11 aufgeschoben ist beziehungsweise die Ruhestellung R einnimmt.

Die Distanzkörper 110a-110d sind jeweils in einem der Aufnahmekanäle 76 angeordnet, nämlich im bezüglich der Schlitten-Führungsbasis 11 jeweils äußeren Aufnahmekanal 76.

Die Distanzkörper 110a-110c stützen sich quasi am Boden des Aufnahmekanals 76 ab, sind also an der Grundwand 74 desselben befestigt, beispielsweise mit nicht dargestellten Schrauben, dort verklebt oder dergleichen. Jedenfalls sind die Distanzkörper 110a-110c bezüglich der Läuferschienen 18 ortsfest.

Eine in den Innenraum 75 vorstehende Stirnseite 111 der Distanzkörper 110a-110c ist der Führungsfläche 68 einer jeweiligen Führungsschiene 15 zugeordnet beziehungsweise gleitet daran. Zur Stirnseite 111 hin führen beidseitig jeweils Schrägflächen 112, die beispielsweise beim Einfahren des Schlittens 12 in Richtung der Schlitten-Führungsbasis 11 an den freien Stirnseiten der Führungsschienen 15 aufgleiten können.

Der Distanzkörper 110d ist zweckmäßigerweise baugleich mit den Distanzkörpern 110a-110c, wobei er allerdings mit seiner Rückseite an der Führungsfläche 68 an der in Fig. 8 rechten Führungsschiene 15 befestigt ist, so dass seine Stirnseite 111 vor die Führungsfläche 68 vorsteht. Auch der Distanzkörper 110d hat Schrägflächen 112, so dass die Läuferschiene 18 beim Einschieben des Schlittens 12 in Richtung der Ruhestellung R an der Schrägfläche 112 aufgleiten kann.

Die Distanzkörper 110a-110d sind in der Ruhestellung R wirksam und positionieren dort den Schlitten 12 bezüglich der Schlitten-Führungsbasis 11. Die Distanzkörper 110a-110d stellen in dieser Längsposition einen Abstand zwischen einerseits den Schienenflächen 78 und andererseits den Führungsflächen 68 her, so dass der Schlitten 12 in der Ruhestellung R im Wesentlichen spielarm bezüglich der Horizontal-Querachse 105 positioniert ist. Wird der Schlitten 12 hingegen ausgezogen, gelangen die bezüglich des Schlittens 12 in Richtung der Längsachse 26 dieselbe Längslage einnehmenden Distanzkörper 110a-110d außer Kontakt mit den ihnen zugeordneten Führungsschienen 15 beziehungsweise Führungsflächen 68. Weiterhin gelangt der Distanzkörper 110d, der in der Ruhestellung des Schlittens 12 etwa dieselbe Längsposition hat wie der Distanzkörper 110c, außer Eingriff mit dem Boden der Verstärkungsrippe 79, mithin also der Grundwand 74 derselben, so dass auch die in Fahrtrichtung des Fahrzeugs 80 vordere beziehungsweise in Auszugsrichtung des Schlittens 12 hintere Seite des Schlittens 12 ein Horizontalspiel bezüglich der Horizontal-Querachse 105 hat.

In der Ruhestellung R wirkt die Halteeinrichtung 30a, 30b zweckmäßigerweise im Sinne eines Horizontal-Verspannens des Schlittens 12 bezüglich der Schlitten-Führungsbasis 11. Das Halteglied 37 greift in seiner Haltestellung in die am Distanzkörper 110a vorgesehen Halteaufnahme 35 ein. Somit hat also der Distanzkörper 110a nicht nur eine Führungs- und Positionierfunktion, sondern bildet auch einen Bestandteil der Halteeinrichtung 30a, 30b.

Das Halteglied 37 wirkt mit einer Halte- oder Spannkraft 114 auf den Distanzkörper 110a, der somit also ein Widerlager für das Halteglied 37 bildet.

Die Spannkraft 114 wirkt zweckmäßigerweise außermittig: Dadurch, dass die Spannkraft 114 nur auf einen Eckbereich des Schlittens 12 wirkt, wird dieser mit einem Drehmoment 115 beaufschlagt, so dass er spielfrei oder nur mit geringem Spiel an der Schlitten-Führungsbasis 11 gehalten wird.

In diesem Zusammenhang sei erwähnt, dass es an sich eine eigenständige Erfindung darstellt, wenn die Halteeinrichtung zugleich als Spanneinrichtung wirkt und eine außermittige Zone mit einer Spann- und Haltekraft beaufschlagt, um ein Drehmoment auf den Schlitten auszuüben und so im Sinne eines Verspannens zu wirken. Mithin ist es also nicht notwendig, dass das Halteglied 37 auf einen Distanzkörper wirkt, sondern es könnte auch so vorgesehen sein, dass das Halteglied unmittelbar auf den jeweiligen Schlitten eines erfindungsgemäßen Lastenträgers wirkt.

Die Distanzkörper 110a, 110c und andererseits die Distanzkörper 110b, 110d sind an einander entgegengesetzten Längsseiten 116a, 116b des Lastenträgers 10, das heißt also der Schlitten-Führungsbasis 11 und des Schlittens 12, angeordnet. Wenn der Schlitten 12 außerhalb der Ruhestellung R ist (Fig. 9a), sind die beiden Distanzkörper 110a, 110b, die an einer Hinterquerseite 118b des Schlittens 12 angeordnet sind, außer Eingriff mit der Schlitten-Führungsbasis 11. In der Ruhestellung R hingegen befinden sich die Distanzkörper 110a, 110b im Bereich der Hinterquerseite 118a der Schlitten-Führungsbasis 11, so dass sie in Kontakt mit den Führungsschienen 15 sind.

Der Distanzkörper 110d befindet sich im Bereich der Vorderquerseite 117a der Schlitten-Führungsbasis 11, der Distanzkörper 110c im Bereich der Vorderquerseite 117b des Schlittens 12. In der Ruhestellung R sind die beiden Vorderquerseiten 117a, 117b nahe beieinander, so dass die beiden Distanzkörper 110c, 110d im Sinne eines Positionierens des Schlittens 12 bezüglich der Schlitten-Führungsbasis 11 wirken. Der formschlüssige Halt des Schlittens 12 bezüglich der Schlitten-Führungsbasis 11 ist beispielsweise in Fig. 10 gut erkennbar.

Während die Distanzkörper 110a-110d in einer bestimmten Längsposition des Schlittens 12 bezüglich der Schlitten-Führungsbasis 11 eine Führungs- und Positionieraufgabe haben, nämlich in der Ruhestellung R, ist es bei Gleiteigenschaften in der Vertikal-Querachse 106 verbessernden Distanzkörpern 120a-120c vorteilhaft, wenn sie in einer Längsposition unwirksam sind, vorliegend der Gebrauchsstellung G. Außerhalb der Gebrauchsstellung G sind die Distanzkörper 120a-120c hingegen wirksam und stellen eine Distanz zwischen der Lagerfläche 67 der Führungsschiene 15 und der Lagerfläche 77 der Läuferschiene 18 her, um deren Gleiteigenschaften zu verbessern. Mithin handelt es sich bei den Distanzkörpern 120a-120c also um Gleitkörper. Freie Stirnseiten der Distanzkörper 120a-120c weisen eine Gleitfläche 121 auf und/oder bestehen aus einem gleitfähigen Material, vorzugsweise aus einem Kunststoffmaterial.

Beispielsweise sind wie in Fig. 8 gezeigt insgesamt vier Distanzkörper 120a auf den Auflagerschenkel 62 angeordnet, zweckmäßigerweise in jeweiligen Eckbereichen der Schlitten-Führungsbasis 11. Wenn der Schlitten 12 entlang der Längsachse 26 verstellt wird, gleiten die Lagerflächen 77 der Läuferschienen 18 auf den klotzartigen Distanzkörpern 120a entlang, so dass der Schlitten 12 besonders leichtgängig ist. Wenn jedoch die Gebrauchsstellung G erreicht ist, sind die Distanzkörper 120a sozusagen inaktiv, das heißt, dass die Lagerflächen 67, 77 in unmittelbaren Kontakt miteinander gelangen, was zum Verspannen mit der Spanneinrichtung 90 vorteilhaft ist. Es versteht sich, dass eine Anordnung auch so getroffen sein kann, dass die Distanzkörper 120a auch in der Gebrauchsstellung G, das heißt jederzeit und in allen Längspositionen, aktiv sind.

Beispielsweise tauchen die Distanzkörper 120a in Aufnahmen 125 ein, wenn der Schlitten 12 die Ruhestellung R (Fig. 11) oder die Gebrauchsstellung G erreicht hat. Die Aufnahmen 125 sind beispielsweise als Bohrungen oder Vertiefungen an den Lagerschenkeln 72 der Läuferschienen 18 ausgestaltet. Eine Ausführungsform, die in Fig. 11 dargestellt ist, kann vorsehen, dass der Distanzkörper 120a im Bereich der Halteeinrichtung 30a nicht in eine Ausnehmung oder Aufnahme eingreift, wenn der Schlitten 12 in der Ruhestellung R ist. Somit erfährt der Schlitten 12 in der Ruhestellung R beispielsweise auch ein Drehmoment bezüglich der Vertikal-Querachse 106. Bevorzugt ist die Anordnung jedoch so getroffen, dass zumindest in der Gebrauchsstellung G jeder der Distanzkörper 120a in eine Aufnahme 125 eingreift, so dass insbesondere beim Verspannen durch die Spanneinrichtung 90 ein unmittelbarer Kontakt zwischen den einander zugewandten Flächen der Führungsschiene 15 und der Läuferschiene 18 gewährleistet ist, ohne dass ein Distanzkörper dazwischenliegt. Eine solche Position der Läuferschiene 18 relativ zur Führungsschiene 15 ist gestrichelt in Fig. 7a eingezeichnet.

Es versteht sich, dass jedoch auch eine gewisse Elastizität eines Distanzkörpers dazu genutzt werden kann, ein optimales, spielfreies Verspannen zu ermöglichen, was in durchgezogenen Linien in Fig. 7a dargestellt ist.

Selbstverständlich können als Gleitkörper dienende Distanzkörper nicht nur an der Führungsschiene, sondern auch an der Läuferschiene eines erfindungsgemäßen Lastenträgers angeordnet werden, was beim Ausführungsbeispiel gemäß Fig. 12, 13a, 13b der Fall ist:

Die Distanzkörper 120b sind dabei an den Läuferschienen 18 befestigt, zweckmäßigerweise im Bereich der Vorderquerseite 117b des Schlittens 12. Gleitflächen 121 der Distanzkörper 120b sind dabei der Lagerfläche 67 der Führungsschiene 15 zugewandt und gleiten auf derselben entlang.

Die Distanzkörper 120c hingegen sind an der Schlitten-Führungsbasis 11 befestigt. Die Distanzkörper 120c stehen nach oben vor die Lagerfläche 67 vor, so dass die Lagerfläche 77 der Läuferschiene 18 auf dem jeweiligen Distanzkörper 120c entlang gleiten kann. Die Distanzkörper 120c sind im Bereich der Hinterquerseite 118a der Schlitten-Führungsbasis 11 an den Führungsschienen 15 befestigt, vorzugsweise nahe bei der Stirnseite.

Abgesehen von der Gebrauchsstellung G sind die Distanzkörper 120b, 120c wirksam, das heißt, sie stellen eine Distanz zwischen den einander zugewandten Lagerflächen 67, 77 her und ermöglichen ein leichtes Gleiten des Schlittens 12 an der Schlitten-Führungsbasis 11.

In der Gebrauchsstellung G hingegen (Fig. 13b) gelangen die Distanzkörper 120b, 120c in Aufnahmen 126, 127, die an der jeweils gegenüberliegenden Führungsschiene 15 beziehungsweise Läuferschiene 18 angeordnet sind. Während die Aufnahme 126 als Vertiefung ausgestaltet ist, handelt es sich bei der Aufnahme 127 um eine Bohrung. Die Aufnahmen 126, 127 sind an den Lagerflächen 67, 77 angeordnet.

Die Distanzkörper 120b, 120c in Zusammenwirkung mit den Aufnahmen 126, 127 bilden zudem eine Rastanordnung. Man kann die Aufnahmen 126, 127 daher auch als Rastaufnahmen bezeichnen, während es sich bei den Distanzkörpern 120b, 120c um Rastvorsprünge handelt. Ist der Schlitten 12 nämlich komplett ausgezogen, das heißt, dass er seine Gebrauchsstellung G einnimmt, rasten die Distanzkörper 120b, 120c sozusagen in die Aufnahmen 126, 127 ein, so dass bezüglich der Längsachse 26 eine Verrastung vorhanden ist. Es versteht sich, dass anders als beim Ausführungsbeispiel, bei dem die Lagerflächen 67, 77 in dieser Position in direktem Kontakt stehen, was im Sinne eines Verspannens durch die Verspanneinrichtung vorteilhaft ist, auch in der Rastposition ein Abstand zwischen einander zugewandten Wandflächen von Schienenpaaren eines erfindungsgemäßen Lastenträgers möglich ist. Man könnte dies beispielsweise dadurch erzielen, dass die Köpfe der Distanzkörper 120b, 120c etwas weiter vor die benachbarte Lagerfläche 77, 67 vorstehen und/oder die Aufnahmen 126, 127 weniger tief sind.

Mit Vorteil sind die Distanzkörper 120a-120c als Blindnieten ausgestaltet, die durch entsprechende Öffnungen an der jeweiligen Schiene 15, 18 durchgesteckt sind. Es versteht sich, dass man auch eine Klebeverbindung vorsehen könnte.

Wie bereits deutlich wurde, können die durch die Verstärkungsrippen 79 bereitgestellten Aufnahmekanäle 76 zur Aufnahme weiterer Komponenten, konkret der Distanzkörper 110a-110d, vorteilhaft genutzt werden. Aber auch für eine optimale Kabelführung beziehungsweise elektrische Stromversorgung des Schlittens 12 eignen sich die Aufnahmekanäle 76:

Zur elektrischen Stromversorgung der Leuchten 21, zweckmäßigerweise LED-Leuchten, und/oder einer Kennzeichenbeleuchtung, mithin also Elektrokomponenten, dient eine Elektro-Leitung 130. Die Elektro-Leitung 130 enthält mehrere Adern (nicht sichtbar), die zweckmäßigerweise in einem Schutz-Schlauch 131 angeordnet sind.

Ein Anschlussende 132 der Elektro-Leitung 130 ist mit einem Bordnetz 88 verbindbar. Das Anschlussende 132 steht vor die Längsseite 116b vor. Ein Verbindungsabschnitt 133 der Elektro-Leitung 130 ist durch einen Zwischenraum zwischen der Halteplatte 14 und der oberhalb verlaufenden Führungsschiene 15 hindurchgeführt und geht in einen Krümmungsabschnitt 134 über. An den Krümmungsabschnitt 134 schließt sich ein Schleifenabschnitt 135 an, der insgesamt zumindest in der Gebrauchsstellung G eine Schleife 136 bildet.

Der Schleifenabschnitt 135 beziehungsweise die Schleife 136 erstreckt sich zwischen einem Basis-Befestigungsort 140 der Schlitten-Führungsbasis 11 und einem Schlitten-Befestigungsort 141 des Schlittens 12. Mithin ist also der Basis-Befestigungsort 140 bezüglich des Fahrzeuges 80 ortsfest, während der Schlitten-Befestigungsort 141 längsbeweglich ist. Die Elektro-Leitung 130 wird also durch den Schlitten 12 mitgenommen, wenn dieser entlang der Längsachse 26 verfahren wird.

Dabei ist eine besonders vorteilhafte Anordnung getroffen derart, dass die Elektro-Leitung 130 weder knickt, noch die Gefahr eines Einklemmens an einer bewegten Komponente des Lastenträgers 10 droht:

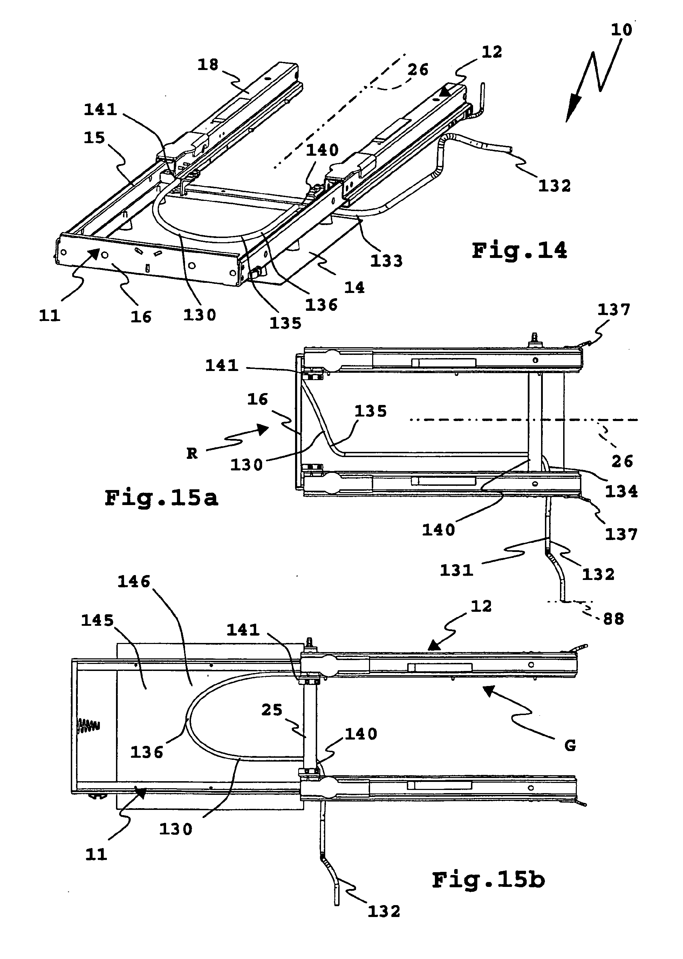

Der Basis-Befestigungsort 140 ist an der Längsseite 116b vorgesehen, während sich der Schlitten-Befestigungsort 141 an der entgegengesetzten Längsseite 116a befindet. Weiterhin befindet sich der Basis-Befestigungsort 140 im Bereich der Hinterquerseite 118a der Schlitten-Führungsbasis 11, während der Schlitten-Befestigungsort 141 an der Vorderquerseite 117b des Schlittens 12 gewählt ist. Insgesamt sind also die Befestigungsorte 140, 141 zueinander diagonal, wenn der Schlitten 12 die Ruhestellung R einnimmt (Fig. 15a). Dabei wird die Schleife 136 sozusagen gestreckt. In der Gebrauchsstellung G hingegen wird die Schleife 136 gekrümmt beziehungsweise in einen Krümmungsverlauf gebogen (Fig. 15b). Dann steht die Schleife 136 vor den Schlitten 12 vor.

Zur optimalen Schleifenbildung der Schleife 136 trägt ferner bei, dass die Elektro-Leitung 130 stirnseitig, das heißt von einer Vorder-Stirnseite des Schlittens 12, eingeführt ist. Mithin steht also die Elektro-Leitung 130 etwa entlang der Längsachse 26 nach vorn (in Schubrichtung) des Schlittens 12 vor diesen vor. Dieselbe Orientierung in Richtung der Längsachse 26 hat die Elektro-Leitung 130 auch im Bereich des Basis-Befestigungsorts 140. Somit sind also die beiden Schleifenenden der Schleife 136 in die gleiche Richtung orientiert, was gut in den Fig. 14, 15b erkennbar ist.

Dadurch, dass die Elektro-Leitung 130 stirnseitig in den Aufnahmekanal 76 eingeführt ist, wird zudem ein Einklemmen vermieden.

Vorzugsweise ist ein Durchmesser der Elektro-Leitung 130, zum Beispiel des Schlauchs 131, so gewählt, dass die Elektro-Leitung 130 formschlüssig, zweckmäßigerweise sogar im Klemmsitz, in dem Aufnahmekanal 76 aufgenommen ist.

Weiterhin ist es zweckmäßig, wenn die Elektro-Leitung 130 eine gewisse Biegesteifigkeit aufweist. Dies kann man beispielsweise durch eine entsprechende Biegesteifigkeit des Schlauches 131 erzielen. Dadurch hat die Elektro-Leitung 130 eine Tendenz zum Strecken, was die Einnahme der Position gemäß Fig. 15a erleichtert.

Es kann aber auch die andere Variante sinnvoll sein, dass die Elektro-Leitung 130 eine relativ hohe Flexibilität aufweist, so dass sie dem Verfahren des Schlittens 12 bezüglich der Schlitten-Führungsbasis 11 einen möglichst geringen Widerstand entgegensetzt.

An ihrem vom Anschlussende 132 entfernten Endbereich hat die Elektro-Leitung 130 Anschlüsse 137, beispielsweise für die Leuchten 21.

Die Schleife 136 kann auf der Halteplatte 14 beim Verfahren des Schlittens 12 bezüglich der Schlitten-Führungsbasis 11 entlang gleiten. Die Halteplatte 14 stellt somit eine Bodenfläche 145 oder eine Gleitfläche bereit. Die Bodenfläche 145 erstreckt sich jedenfalls über den Zwischenraum 146 zwischen den Führungsschienen 15, in dem sich die Schleife 136 befindet. Es versteht sich, dass anstelle der Halteplatte 14 auch eine Komponente des Fahrzeugs 80, beispielsweise der Karosserie 81, eine Gleitfläche für die Schleife 136 bereitstehen kann.

## Patentansprüche

1. Lastenträger für ein Fahrzeug (80), insbesondere einen Personenkraftwagen, mit einer Schlitten-Führungsbasis (11), insbesondere zur Montage an einer Lastenträgeraufnahme (87) des Fahrzeugs (80), und mit einem an der Schlitten-Führungsbasis (11) geführten, zwischen einer Ruhestellung (R) und einer Gebrauchsstellung (G) entlang einer Längsachse (26) verstellbaren Schlitten (12), wobei der Schlitten (12) in der Gebrauchsstellung (G) insbesondere zum Tragen einer Last weiter als in der Ruhestellung (R) vor die Schlitten-Führungsbasis (11) vorsteht, wobei die Schlitten-Führungsbasis (11) Führungsschienen (15) aufweist, an denen Läuferschienen (18) des Schlittens (12) geführt sind, wobei zwischen einander zugewandten Schienenflächen (68, 78) mindestens eines Schienenpaars (28), das eine Läuferschiene (18) und Führungsschiene (15) umfasst, mindestens ein Distanzkörper (110a-110c; 120a-120c) angeordnet ist, der in mindestens einer der Längspositionen des Schlittens (12) eine Distanz zwischen den Schienenflächen (68, 78) herstellt, **dadurch gekennzeichnet, dass** der mindestens eine Distanzkörper (110a-110c; 120a-120c) in mindestens einer Längsposition des Schlittens (12) eine inaktive Stellung einnimmt, in der die einander zugewandten Schienenflächen (68, 78) der Führungsschiene (15) und der Läuferschiene (18) in der direkten Umgebung des mindestens einen Distanzkörpers (110a-110c; 120a-120c) in unmittelbaren Kontakt zueinander gelangen.

2. Lastenträger nach Anspruch 1, **dadurch gekennzeichnet, dass** der mindestens eine Distanzkörper (110a-110c; 120a-120c) eine Gleitfläche (121) zum Gleiten an der Läuferschiene (18) oder an der Führungsschiene (15) und/oder eine Führungsfläche zum Führen der Läuferschiene (18) oder der Führungsschiene (15) und/oder eine Schrägfläche (112) aufweist, an der die jeweils andere Schienenfläche (68, 78) oder ein daran angeordneter Distanzkörper (110a-110c; 120a-120c) aufgleiten kann.

3. Lastenträger nach Anspruch 1 oder 2, **dadurch gekennzeichnet, dass** der mindestens eine Distanzkörper (110a-110c; 120a-120c) in der Gebrauchsstellung (G) und/oder der Ruhestellung (R) des Schlittens (12) die inaktive Stellung einnimmt.

4. Lastenträger nach einem der vorhergehenden Ansprüche, **dadurch gekennzeichnet, dass** der mindestens eine Distanzkörper (110a-110c; 120a-120c) an einer der Führungsschiene (15) oder der Läuferschiene (18) angeordnet ist und für den mindestens einen Distanzkörper (110a-110c; 120a-120c) an der jeweils anderen Schiene (Führungsschiene (15) oder Läuferschiene (18) eine Aufnahme (125-127), insbesondere eine Vertiefung oder eine Öffnung, zur Aufnahme des mindestens einen Distanzkörpers (110a-110c; 120a-120c) in der inaktiven Stellung angeordnet ist.

5. Lastenträger nach einem der vorhergehenden Ansprüche, **dadurch gekennzeichnet, dass** eine Rastaufnahme zum Verrasten des mindestens einen Distanzkörpers (110a-110c; 120a-120c) und somit des Schlittens (12) in der Längsposition an der Führungsschiene (15) oder der Läuferschiene (18) angeordnet ist, die der Läuferschiene (18) beziehungsweise der Führungsschiene (15) zugeordnet ist, an der der mindestens eine Distanzkörper (110a-110c; 120a-120c) angeordnet ist.

6. Lastenträger nach einem der vorhergehenden Ansprüche, **dadurch gekennzeichnet, dass** er eine Spanneinrichtung (90) zum Verspannen der Läuferschiene (18) mit der Führungsschiene (15) aufweist, und dass die Spanneinrichtung (90) zum Verspannen der Läuferschiene (18) mit der Führungsschiene (15) in der inaktiven Stellung des mindestens einen Distanzkörpers (110a-110c; 120a-120c) vorgesehen ist und/oder dass die Spanneinrichtung (90) zum unmittelbaren Verspannen der einander zugewandten Schienenflächen (68, 78) des mindestens eines Schienenpaars (28) gegeneinander vorgesehen ist.

7. Lastenträger nach einem der vorhergehenden Ansprüche, **dadurch gekennzeichnet, dass** er eine mindestens ein Halteglied (37) aufweisende Halteeinrichtung (30a; 30b) aufweist, die in einer Haltestellung den Schlitten (12) in mindestens einer Stellung bezüglich der Schlitten-Führungsbasis (11) hält und in einer Freigabestellung den Schlitten (12) zu einer Verstellung bezüglich der Schlitten-Führungsbasis (11) freigibt.

8. Lastenträger nach Anspruch 7, **dadurch gekennzeichnet, dass** der mindestens eine Distanzkörper (110a-110c; 120a-120c) ein Widerlager für das mindestens eine Halteglied (37) in der Haltestellung bildet und/oder eine Halteaufnahme (35) für das mindestens eine Halteglied (37) aufweist.

9. Lastenträger nach Anspruch 7 oder 8, **dadurch gekennzeichnet, dass** das mindestens eine Halteglied (37) in der Haltestellung eine Spannkraft (114) auf den Schlitten (12) quer zu der Längsachse (26), insbesondere etwa horizontal, ausübt.

10. Lastenträger nach einem der Ansprüche 7 bis 9, **dadurch gekennzeichnet, dass** das mindestens eine Halteglied (37) in der Haltestellung die Spannkraft (114) auf einen bezüglich der Längsachse (26) außermittigen Bereich, insbesondere auf einen Eckbereich, des Schlittens (12) ausübt derart, dass die Läuferschienen (18) mit einem Drehmoment (115) quer zu der Längsachse (26) gegen die Führungsschienen (15) gespannt werden.

11. Lastenträger nach einem der vorhergehenden Ansprüche, **dadurch gekennzeichnet, dass** er mindestens zwei Distanzkörper (110a-110c; 120a-120c) aufweist, von denen einer am Schlitten (12) und einer an der Schlitten-Führungsbasis an einander entgegengesetzten Längsseiten (116a, 116b) des Lastenträgers angeordnet sind und die in einer der Längspositionen des Schlittens (12), insbesondere der Gebrauchsstellung (G) oder der Ruhestellung (R), bezüglich der Längsachse (26) etwa in derselben Höhe angeordnet sind und eine Positionierposition einnehmen, in der die Distanzkörper (110a-110c; 120a-120c) in Kontakt mit ihren benachbarten, einander zugewandten Schienenflächen (68, 78) der Läuferschiene (18) und der Führungsschiene (15) sind und den Schlitten (12) bezüglich der Schlitten-Führungsbasis (11) positionieren.

12. Lastenträger nach einem der vorhergehenden Ansprüche, **dadurch gekennzeichnet, dass** er mindestens einen am Schlitten (12) angeordneten Distanzkörper (110a-110c; 120a-120c), zweckmäßigerweise zwei an einander entgegengesetzten Längsseiten (116a, 116b) des Schlittens (12) angeordnete Distanzkörper (110a-110c; 120a-120c), aufweist, der in einer von der Schlitten-Führungsbasis (11) entfernteren Längsposition des Schlittens (12) außer Kontakt und in einer näher zu der Schlitten-Führungsbasis (11) hin verstellten Längsposition des Schlittens (12), insbesondere der Ruhestellung (R), in Kontakt mit der zugeordneten Führungsschiene (15) ist.

13. Lastenträger nach einem der vorhergehenden Ansprüche, **dadurch gekennzeichnet, dass** er zwei bezüglich der Längsachse (26) beabstandete Distanzkörper-Paare mit jeweils paarweise an einander entgegengesetzten Längsseiten (116a, 116b) des Lastenträgers angeordneten Distanzkörpern (110a-110c; 120a-120c) aufweist, wobei die Distanzkörper (110a-110c; 120a-120c) des einen Distanzkörper-Paars am Schlitten (12) angeordnet sind und in einer zur Schlitten-Führungsbasis (11) hin verstellten Längsposition des Schlittens (12), insbesondere der Ruhestellung (R), in Kontakt und davon entfernt außer Kontakt mit den zugeordneten Führungsschienen (15) sind, und je ein Distanzkörper (110a-110c; 120a-120c) des anderen Distanzkörper-Paars am Schlitten (12) und an der Schlitten-Führungsbasis (11) angeordnet ist und in dieser zur Schlitten-Führungsbasis (11) hin verstellten Längsposition des Schlittens (12) eine Positionierposition einnehmen, in der die Distanzkörper (110a-110c; 120a-120c) in Kontakt mit ihren benachbarten, einander zugewandten Schienenflächen (68, 78) der Läuferschiene (18) und der Führungsschiene (15) sind und den Schlitten (12) bezüglich der Schlitten-Führungsbasis (11) positionieren.

14. Lastenträger nach einem der vorhergehenden Ansprüche, **dadurch gekennzeichnet, dass** mindestens eine der Läuferschienen (18) und/oder mindestens eine der Führungsschienen (15) einen Grundschenkel (70) und einen zu dem Grundschenkel (70) winkeligen Seitenschenkel (71a, 71b) aufweist, und dass an dem Grundschenkel (70) und/oder dem Seitenschenkel (71a, 71b) mindestens eine sich in Richtung der Längsachse (26) erstreckende Verstärkungsrippe (79) angeordnet ist, wobei die mindestens eine Verstärkungsrippe (79) zweckmäßigerweise einen Aufnahmekanal (76) zur Aufnahme mindestens einer Komponente, insbesondere eines Kabels und/oder eines Führungskörpers und/oder einer Antriebskomponente und/oder einer Verriegelungskomponente und/oder des mindestens einen Distanzkörpers (110a-110c; 120a-120c), begrenzt.

15. Lastenträger nach einem der vorhergehenden Ansprüche, **dadurch gekennzeichnet, dass** mindestens eine der Führungsschienen (15) einen Auflagerschenkel (62) zum Lagern der zugeordneten Läuferschiene (18) aufweist, der von einem zum Abstützen des Auflagerschenkels (62) vorgesehenen Stützschenkel (61) der Führungsschiene (15) winkelig absteht, und dass an einer zu dem Stützschenkel (61) entgegengesetzten, in Richtung der Längsachse (26) verlaufenden Längsseite des Auflagerschenkels (62) ein Verstärkungsschenkel (63) angeordnet ist, der von dem Auflagerschenkel (62) in Richtung zu dem Stützschenkel (61) hin winkelig absteht, wobei der Verstärkungsschenkel (63) zweckmäßigerweise quer zu der Längsachse (26) kürzer als der Stützschenkel (61) ist, so dass unterhalb des Verstärkungsschenkels (63), neben dem Stützschenkel (61) ein Freiraum (65) vorhanden ist und/oder wobei der mindestens eine Distanzkörper (110a-110c; 120a-120c) an der mindestens einen Führungsschienen (15), insbesondere deren Auflagerschenkel (62), angeordnet ist.

## Claims

1. Load carrier for a vehicle (80), in particular a car, with a carriage guide base (11), in particular for mounting on a load carrier seating (87) of the vehicle (80), and with a carriage (12) guided on the carriage guide base (11) and adjustable along a longitudinal axis (26) between a rest position (R) and a position of use (G), wherein the carriage (12) in the position of use (G) extends further beyond the carriage guide base (11) than in the rest position (R), in particular to carry a load, wherein the carriage guide base (11) has guide rails (15) on which are guided running rails (18) of the carriage (12), wherein between facing rail surfaces (68, 78) of at least one pair of rails (28) comprising a running rail (18) and a guide rail (15), there is provided at least one spacer element (110a-110c; 120a-120c) which creates a space between the rail surfaces (68, 78) in at least one of the longitudinal positions of the carriage (12), **characterised in that** the spacer element or elements (110a-110c; 120a-120c), in at least one longitudinal position of the carriage (12), assumes or assume an inactive position in which the facing rail surfaces (68, 78) of the guide rail (15) and the running rail (18) are in direct contact with one another in the immediate vicinity of the spacer element or elements (110a-110c; 120a-120c).

2. Load carrier according to claim 1, **characterised in that** the spacer element or elements (110a-110c; 120a-120c) has or have a sliding surface (121) for sliding on the running rail (18) or on the guide rail (15) and/or a guide surface for guiding on the running rail (18) or the guide rail (15), and/or an inclined surface (112) on which the respective other rail surface (68, 78) or a spacer element (110a-110c; 120a-120c) located thereon is able to slide.

3. Load carrier according to claim 1 or 2, **characterised in that** the spacer element or elements (110a-110c; 120a-120c) assumes or assume the inactive position in the position of use (G) and/or the position of rest (R) of the carriage (12).

4. Load carrier according to any of the preceding claims, **characterised in that** the spacer element or elements (110a-110c; 120a-120c) is or are located on either the guide rail (15) or the running rail (18), and for the spacer element or elements (110a-110c; 120a-120c) on the respective other rail (guide rail (15) or running rail (18)) a location (125-127), in particular a recess or an opening, is provided to hold the the spacer element or elements (110a-110c; 120a-120c) in the inactive position.

5. Load carrier according to any of the preceding claims, **characterised in that** a latching location for latching the the spacer element or elements (110a-110c; 120a-120c) and therefore the carriage (12) is provided on the guide rail (15) or the running rail (18) in the longitudinal position assigned to the running rail (18) or the guide rail (15) on which the spacer element or elements (110a-110c; 120a-120c) is or are located.

6. Load carrier according to any of the preceding claims, **characterised in that** it has a clamping fixture (90) for clamping the running rail (18) to the guide rail (15), and that the clamping fixture (90) is provided for clamping the running rail (18) to the guide rail (15) in the inactive position of the spacer element or elements (110a-110c; 120a-120c) and/or that the clamping fixture (90) is provided for direct clamping to one another of the facing rail surfaces (68, 78) of the pair(s) of rails (28).

7. Load carrier according to any of the preceding claims, **characterised in that** it has a holding fixture (30a; 30b) with one or more holding elements (37) and which in a holding position holds the carriage (12) in at least one position relative to the carriage guide base (11), and in a release position releases the carriage (12) for adjustment relative to the carriage guide base (11).

8. Load carrier according to claim 7, **characterised in that** the spacer element or elements (110a-110c; 120a-120c) form a thrust bearing for the holding
element or elements (37) in the holding position and/or has/have a holding location (35) for the holding element or elements (37).

9. Load carrier according to claim 7 or 8, **characterised in that** the holding element or elements (37) exert(s) a clamping force (114) on the carriage (12), in particular roughly horizontal, at right-angles to the longitudinal axis (26).

10. Load carrier according to any of claims 7 to 9, **characterised in that** the holding element or elements (37) in the holding position exert(s) the clamping force (114) on an area which is off-centre relative to the longitudinal axis (26), in particular on a corner zone of the carriage (12), in such a way that the running rails (18) are clamped against the guide rails (15) by a torque (115) at right-angles to the longitudinal axis (26).

11. Load carrier according to any of the preceding claims, **characterised in that** it has at least two spacer elements (110a-110c; 120a-120c), of which one is mounted on the carriage (12) and one on the carriage guide base on opposite long sides (116a, 116b) of the load carrier, and which in one of the longitudinal positions of the carriage (12), in particular the position of use (G) or the position of rest (R), are arranged at approximately the same height relative to the longitudinal axis (26) and assume a positioning stance in which the spacer elements (110a-110c; 120a-120c) are in contact with their adjacent, facing rail surfaces (68, 78) of the running rail (18) and the guide rail (15), and position the carriage (12) relative to the carriage guide base (11).

12. Load carrier according to any of the preceding claims, **characterised in that** it has at least one spacer element (110a-110c; 120a-120c) mounted on the carriage (12), expediently two spacer elements (110a-110c; 120a-120c) mounted on opposite long sides (116a, 116b) of the carriage (12), which in a longitudinal position of the carriage (12) further removed from the carriage guide base (11) are out of contact, and in a longitudinal position of the carriage (12) moved closer to the carriage guide base (11), in particular the position of rest (R), is or are in contact with the assigned guide rail (15).

13. Load carrier according to any of the preceding claims, **characterised in that** it has two pairs of spacer elements, spaced apart relative to the longitudinal axis (26), each with spacer elements (110a-110c; 120a-120c) arranged in pairs on opposite long sides (116a, 116b) of the load carrier, wherein the spacer elements (110a-110c; 120a-120c) of the one spacer element pair are mounted on the carriage (12) and in a longitudinal position of the carriage (12) moved towards the carriage guide base (11), in particular the position of rest (R), are in contact with, and moved away are out of contact with the assigned guide rails (15), and one spacer element (110a-110c; 120a-120c) each of the other spacer element pair is mounted on the carriage (12) and on the carriage guide base (11) and in this longitudinal position of the carriage (12) moved towards the carriage guide base (11) assume a positioning stance in which the spacer elements (110a-110c; 120a-120c) are in contact with their adjacent, facing rail surfaces (68, 78) of the running rail (18) and the guide rail (15) and position the carriage (12) relative to the carriage guide base (11).

14. Load carrier according to any of the preceding claims, **characterised in that** at least one of the running rails (18) and/or at least one of the guide rails (15) has a base leg (70) and a side leg (71 a, 71 b) at an angle to the base leg (70), and that there is provided on the base leg (70) and/or the side leg (71 a, 71 b) at least one reinforcing rib (79) extending in the direction of the longitudinal axis (26), wherein the reinforcing rib or ribs (79) bound(s) a locating channel (76) for locating at least one component, in particular a cable and/or a guide body and/or a drive component and/or a locking component and/or the spacer element or elements (110a-110c; 120a-120c).

15. Load carrier according to any of the preceding claims, **characterised in that** at least one of the guide rails (15) has a supporting leg (62) to support the
assigned running rail (18), which stands out at an angle from a support leg (61) of the guide rail (15) provided to support the supporting leg (62), that at a long side of the supporting leg (62) opposite the support leg (61) and running in the direction of the longitudinal axis (26) there is provided a reinforcing leg (63) which stands out at an angle from the supporting leg (62) towards the support leg (61), wherein at right-angles to the longitudinal axis (26) the reinforcing leg (63) is expediently shorter than the support leg (61), so that an open space (65) is provided next to the support leg (61) and below the reinforcing leg (63) and/or wherein the spacer element or elements (110a-110c; 120a-120c) is or are located on the guide rail or rails (15), in particular on their supporting leg (62).

## Revendications

1. Support de charges pour un véhicule (80), notamment pour un véhicule particulier, comportant une base de guidage de chariot (11), servant en particulier au montage au niveau d'un logement de support de charges (87) du véhicule (80), et comportant un chariot (12) guidé au niveau de la base de guidage de chariot (11) et pouvant être déplacé entre une position de repos (R) et une position d'utilisation (G) le long d'un axe longitudinal (26), sachant que le chariot (12) fait davantage saillie de la base de guidage du chariot (11) dans la position d'utilisation (G) servant en particulier à porter une charge que dans la position de repos (R), sachant que la base de guidage de chariot (11) présente des rails de guidage (15) au niveau desquels des rails coulissants (18) du chariot (12) sont guidés, sachant qu'au moins un corps d'écartement (110a-110c ; 120a-120c) est disposé entre des faces de rails (68, 78) tournées les unes vers les autres d'au moins une paire de rails (28), qui comporte un rail coulissant (18) et un rail de guidage (15), lequel corps d'écartement établit un écartement entre les faces de rails (68, 78) dans au moins une des positions longitudinales du chariot (12), **caractérisé en ce que** le corps d'écartement (110a-110c ; 120a-120c) au moins au nombre de un prend un position inactive dans au moins une position longitudinale du chariot (12), dans laquelle les faces de rails (68, 78) tournées les unes vers les autres du rail de guidage (15) et du rail coulissant (18) sont amenées en contact direct les unes avec les autres dans le voisinage direct du corps d'écartement (110a-110c ; 120a-120c) au moins au nombre de un.

2. Support de charges selon la revendication 1, **caractérisé en ce que** le corps d'écartement (110a-110c ; 120a-120c) au moins au nombre de un présente une face de glissement (121) servant à glisser au niveau du rail coulissant (18) ou au niveau du rail de guidage (15) et/ou une face de guidage servant à guider le rail coulissant (18) et/ou le rail de guidage (15) et/ou une face oblique (112), au niveau de laquelle l'autre face de chariot (68, 78) respective ou un corps d'écartement (110a-110c ; 120a-120c) disposé à ce niveau peuvent glisser.

3. Support de charges selon la revendication 1 ou 2, **caractérisé en ce que** le corps d'écartement (110a-110c ; 120a-120c) au moins au nombre de un prend la position inactive lorsque le chariot (12) est en position d'utilisation (G) et/ou en position de repos (R).

4. Support de charges selon l'une quelconque des revendications précédentes, **caractérisé en ce que** le corps d'écartement (110a-110c ; 120a-120c) au moins au nombre de un est disposé au niveau soit du rail de guidage (15) soit du rail coulissant (18), et **en ce que** pour le corps d'écartement (110a-110c ; 120a-120c) au moins au nombre de un, un logement (125-127), en particulier un creux ou un orifice, servant à recevoir le corps d'écartement (110a-110c ; 120a-120c) au moins au nombre de un, est disposé au niveau de l'autre rail respectif (rail de guidage (15) ou rail coulissant (18)).

5. Support de charges selon l'une quelconque des revendications précédentes, **caractérisé en ce qu'**un logement d'encliquetage servant à engrener le corps d'écartement (110a-110c ; 120a-120c) au moins au nombre de un et par là même le chariot (12) est disposé dans la position longitudinale au niveau du rail de guidage (15) ou au niveau du rail coulissant (18), lequel logement est associé au rail coulissant (18) ou au rail de guidage (15), au niveau duquel est disposé le corps d'écartement (110a-110c ; 120a-120c) au moins au nombre de un.

6. Support de charges selon l'une quelconque des revendications précédentes, **caractérisé en ce qu'**il présente un dispositif de serrage (90) servant à enserrer le rail coulissant (18) avec le rail de guidage (15), et **en ce que** le dispositif de serrage (90) servant à enserrer le rail coulissant (18) avec le rail de guidage (15) est prévu dans la position inactive du corps d'écartement (110a-110c ; 120a-120c) au moins au nombre de un, et/ou **en ce que** le dispositif de serrage (90) est prévu pour enserrer les unes contre les autres de manière directe les faces de rail (68, 78) tournées les unes vers les autres de la paire de rails (28) au moins au nombre de une.

7. Support de charges selon l'une quelconque des revendications précédentes, **caractérisé en ce qu'**il présente un dispositif de retenue (30a ;
30b) présentant au moins un organe de retenue (37), lequel dispositif de retenue maintient dans une position d'arrêt le chariot (12) dans au moins une position par rapport à la base de guidage de chariot (11) et libère dans une position de libération le chariot (12) en vue d'un ajustement par rapport à la base de guidage de chariot (11).

8. Support de charges selon la revendication 7, **caractérisé en ce que** le corps d'écartement (110a-110c ; 120a-120c) au moins au nombre de un forme un palier de butée pour l'organe de retenue (37) au moins au nombre de un dans la position d'arrêt et/ou présente un logement de retenue (35) pour l'organe de retenue (37) au moins au nombre de un.

9. Support de charges selon la revendication 7 ou 8, **caractérisé en ce que** l'organe de retenue (37) au moins au nombre de un exerce dans la position d'arrêt une force de serrage (114) sur le chariot (12) de manière transversale par rapport à l'axe longitudinal (26), en particulier de manière à peu près horizontale.

10. Support de charges selon l'une quelconque des revendications 7 à 9, **caractérisé en ce que** l'organe de retenue (37) au moins au nombre de un exerce dans la position d'arrêt la force de serrage (114) sur une zone médiane extérieure par rapport à l'axe longitudinal (26), en particulier sur une zone de coin, du chariot (12) de telle manière que les rails coulissants (18) sont tendus avec un couple de rotation (115) de manière transversale par rapport à l'axe longitudinal (26) contre les rails de guidage (15).

11. Support de charges selon l'une quelconque des revendications précédentes, **caractérisé en ce qu'**il présente au moins deux corps d'écartement (110a-110c ; 120a-120c), dont l'un est disposé au niveau du chariot (12) et l'autre au niveau de la base de guidage de chariot, au niveau des côtés longitudinaux (116a, 116b) opposés du support de charges et qui sont disposés dans une des positions longitudinales du chariot (12), en particulier dans la position d'utilisation (G) ou dans la position de repos (R), par rapport à l'axe longitudinal (26) à peu près à la même hauteur et prennent une position de positionnement, dans laquelle les corps d'écartement (110a-110c ; 120a-120c) sont en contact avec leurs faces de rails (68, 78) du rail coulissant (18) et du rail de guidage (15), lesquelles surfaces étant contiguës et tournées les uns vers les autres, et positionnent le chariot (12) par rapport à la base de guidage de chariot (11).

12. Support de charges selon l'une quelconque des revendications précédentes, **caractérisé en ce que** ledit support de charges présente au moins un corps d'écartement (110a-110c ; 120a-120c) disposé au niveau du chariot (12), de manière appropriée deux corps d'écartement (110a-110c ; 120a-120c) disposés au niveau des côtés longitudinaux (116a, 116b) du chariot (12) opposés, lequel corps d'écartement ne se trouve pas en contact avec le rail de guidage (15) associé dans une position longitudinale du chariot (12) éloignée de la base de guidage de chariot (11) et est en contact avec le rail de guidage (15) associé dans une position longitudinale du chariot (12) rapprochée de la base de guidage de chariot (11), en particulier dans la position de repos (R).

13. Support de charges selon l'une quelconque des revendications précédentes, **caractérisé en ce que** ledit support de charges présente deux paires de corps d'écartement espacées par rapport à l'axe longitudinal (26) comportant des corps d'écartement (110a-110c ; 120a-120c) disposés respectivement par paire au niveau des côtés longitudinaux (116a, 116b) opposés du support de charges, sachant que les corps d'écartement (110a-110c ; 120a-120c) d'une des paires de corps d'écartement sont disposés au niveau du chariot (12) et sont en contact avec les rails de guidage (15) associés dans une position longitudinale du chariot (12) déplacée en direction de la base de guidage de chariot (11), en particulier dans une position de repos (R) et/ou en sont éloignés sans contact, respectivement un corps d'écartement (110a-110c ; 120a-120c) de l'autre paire de corps d'écartement étant disposé au niveau du chariot (12) et au niveau de la base de guidage de chariot (11) et prennent une position de positionnement dans ladite position longitudinale du chariot (12) déplacée en direction de la base de guidage de chariot (11), dans laquelle les corps d'écartement (110a-110c ; 120a-120c) sont en contact avec leurs faces de rails (68, 78) contiguës, tournées les unes vers les autres du rail coulissant (18) et du rail de guidage (15) et positionnent le chariot (12) par rapport à la base de guidage de chariot (11).

14. Support de charges selon l'une quelconque des revendications précédentes, **caractérisé en ce qu'**au moins un des rails coulissants (18) et/ou au moins un des rails de guidage (15) présentent une branche de base (70) et une branche latérale (71a, 71b) placée de manière à former un angle par rapport à la branche de base (70), et **en ce qu'**au moins une nervure de renforcement (79) s'étendant en direction de l'axe longitudinal (26) est disposée au niveau de la branche de base (70) et/ou au niveau de la branche latérale (71 a, 71 b), sachant que la nervure de renforcement (79) au moins au nombre de une délimite de manière appropriée un canal récepteur (76) servant à loger au moins un composant, en particulier un câble et/ou un corps de guidage et/ou un composant d'entraînement et/ou un composant de verrouillage et/ou le corps d'écartement au moins au nombre de un (110a-110c ; 120a-120c).

15. Support de charges selon l'une quelconque des revendications précédentes, **caractérisé en ce qu'**au moins un des rails de guidage (15) présente une branche d'appui (62) servant à loger le rail coulissant (18) associé, lequel dépasse en formant en angle d'une branche de support (61) du rail de guidage (15) prévue pour supporter la branche d'appui (62), et **en ce qu'**une branche de renforcement (63) est disposée au niveau d'un côté longitudinal de la branche d'appui (62) opposé à la branche de support (61) et s'étendant en direction de l'axe longitudinal (26), laquelle branche de renforcement dépasse de la branche d'appui (62) en direction de la branche de support (62) de manière à former un angle, sachant que la branche de renforcement (63) est de manière appropriée plus courte que la branche de support (62) transversalement par rapport à l'axe longitudinal (26) si bien qu'un espace libre (65) est présent sous la branche de renforcement (63), à proximité de la branche de support (61), et/ou sachant que le corps d'écartement (110a-110c ; 120a-120c) au moins au nombre de un est disposé au niveau du rail de guidage (15) au moins au nombre de un, en particulier au niveau de sa branche d'appui (62).
